# EUROPEAN PATENT APPLICATION

(11) **EP 4 050 204 A1**
(43) Date of publication of application: **31.08.2022**
(21) Application number: 21159146.6
(22) Date of filing: 25.02.2021
(51) Int. Cl.: F03D 7/02

(54) **ROTOR BLADE WITH CONTROLLABLE AERODYNAMIC DEVICE WITH DIELECTRIC ELECTROACTIVE POLYMER-BASED ACTUATOR FOR A WIND TURBINE**

(71) Applicant: Siemens Gamesa Renewable Energy A/S, 7330 Brande (DK)
(72) Inventor: Wind-Larsen, Taus, 8000 Aarhus C (DK)
(74) Representative: Aspacher, Karl-Georg

(57) **Abstract**

Disclosed is a rotor blade (20) for a wind turbine (10), wherein the rotor blade (20) has a rotor blade wall (251, 65), which forms an outer envelope of the rotor blade (20) and extends between a leading edge section (23) of the rotor blade and a trailing edge section (24) of the rotor blade, and which provides a mounting section (252) arranged on a suction side (25) of the rotor blade and for accommodating an aerodynamic device (29, 60). The aerodynamic device (29, 60) has an air flow guiding element (61), which is pivotally connected to the rotor blade wall (251, 65) in the mounting section (252), and a linearly operating actuator (62), which is operatively coupled to the air flow guiding element (61), and which is arranged and configured to adjust an orientation of the air flow guiding element (61) between a first orientation (611) and a second orientation (612). The air flow guiding element (61) causes a strongest influence on the portion of an air flow (28) flowing along the suction side (25) from the leading edge section (23) to the trailing edge section (24) of the rotor blade (20) when the air flow guiding element (61) is in its second orientation (612), and causes a weakest or substantially no influence on the portion of the air flow when the air flow guiding element (61) is in its first orientation (611). The actuator (62) has a configuration (44-47; 54-56), which comprises at least one dielectric electroactive polymer, DEAP, film (43; 53) that is sandwiched between a first electrode layer (41; 51) and a second electrode layer (42; 52) associated with the film (43; 53), and which is configured to be actuated by applying an electric voltage difference to the first and the second electrode layer (41, 42; 51, 52) such that the air flow guiding element (61) assumes a position between the first and the second orientation (611, 612) .

## Description

### Technical area

The present disclosure relates generally to a rotor blade for a wind turbine. In particular, the present disclosure relates to rotor blade for a wind turbine and having an aerodynamic device with a dielectric electroactive polymer-based actuator, a method for operating a wind turbine comprising a rotor blade having such an aerodynamic device, and a wind turbine comprising such a rotor blade or being operated according to the method.

### Background art

It is known to provide rotor blades for a wind turbine with an aerodynamic device for influencing the air flow, which flows from a leading edge section to a trailing edge section of the rotor blade. Examples of such an aerodynamic device comprise a spoiler arranged at a surface of the rotor blade between the leading edge section and the trailing edge section namely at a suction side of the rotor blade as disclosed for example in WO 2018/041420 A1 and in WO 2020/120330 A1, and a flap or blade flap arranged at the trailing edge section of the rotor blade as disclosed for example in WO 2010/151230 A1. These aerodynamic devices are configured such that their shape and/or orientation can be regulated, e.g. by a suitable actuator.

WO 2018/041420 A1 discloses a flow control arrangement for a rotor blade of a wind turbine. A rotor blade comprises a controllable or adaptable aerodynamic device for influencing the air flow flowing from the leading edge section of the rotor blade to the trailing edge section of the rotor blade. The aerodynamic device is mounted at a surface of the rotor blade and comprises a pneumatic or hydraulic actuator, such as a hose or a cavity, of which the volume depends on the pressure of a fluid being present inside the pneumatic or hydraulic actuator. The rotor blade further comprises a control unit for controlling the pressure of the fluid in the hose or the cavity of the aerodynamic device. The aerodynamic device is in a first configuration when no pressure application to the fluid in the pneumatic or hydraulic actuator is induced by the control unit, and is in a second configuration when the control unit induces the application of a positive or negative pressure to the fluid in the pneumatic or hydraulic actuator. The rotor blade is furthermore characterized in that its lift in the first configuration is smaller than the lift of the rotor blade in the second configuration.

WO 2020/120330 A1 discloses an adaptable aerodynamic device or spoiler for a rotor blade of a wind turbine. The aerodynamic device comprises a main body comprising an airfoil shaped surface to be exposed to air flow; at least one stiffening element distinct from the main body and supporting the airfoil surface, wherein the stiffening element is in particular configured to enforce the shape of the airfoil surface during loading by wind during operation of the wind turbine.

The adaptable aerodynamic device or spoiler of both WO 2018/041420 A1 and WO 2020/120330 A1 is used to alter the lift of the rotor blade by influencing the air flow flowing from the leading edge section to the trailing edge section of the rotor blade. The aerodynamic device or spoiler may also create flow separation and provoke a stall effect to reduce the aerodynamic load (or lift) of the rotor blade without pitching the rotor blade, i.e. changing the angle of attack of the air flow on the rotor blade.

WO 2010/151230 A1 discloses an actuatable blade flap arranged in the trailing edge section of a rotor blade of a wind turbine, and an actuator system for actuating the blade flap. The actuator system includes a first lever having a first arm pivotable about a first pivot axis, and a second arm extending away from the first arm. The second arm is fixed to the first arm at a position spaced away from the first pivot axis. The actuator system also includes an actuator element slidably coupled to the second arm via a coupling element. Upon activation of the actuator element, the actuator element is adapted to push the coupling element towards to or pull the coupling element away from the second arm such that the coupling element applies pressure on the second arm and performs a sliding movement along the second arm. The actuator element can comprise a piezoelectric stack, electrorestrictive materials, dielectric electroactive polymers, piezopolymers, shape memory alloys, and pneumatics.

### Summary of the disclosure

The present disclosure generally aims at providing an adjustable aerodynamic device or spoiler, which is to be arranged on the suction side of the wind turbine rotor blade between the leading edge section and the trailing edge section of the rotor blade, for changing an aerodynamic load (or lift) of a rotor blade of a wind turbine without pitching the rotor blade. The present disclosure does not relate to a flap to be arranged at the trailing edge section of the rotor blade. Such an adjustable aerodynamic device or spoiler provides in particular the possibility of changing the aerodynamic load of a rotor blade for various control purposes.

It is an object of the present disclosure to provide a rotor blade of a wind turbine that is capable to change the aerodynamic load (or lift) of the rotor blade without pitching the rotor blade, and to provide this possibility for various control purposes, while reducing complexity, weight and/or cost of an existing aerodynamic device for a rotor blade.

This object is solved in particular by the subjects having the features according to the independent patent claims. Further embodiment examples are shown in the dependent claims.

According to a first embodiment example of the present disclosure, there is provided a rotor blade for a wind turbine, wherein the rotor blade has:
a rotor blade wall, which forms an outer envelope of the rotor blade and extends between a leading edge section of the rotor blade and a trailing edge section of the rotor blade, and which provides a mounting section arranged on a suction side of the rotor blade and for accommodating an aerodynamic device;
wherein the aerodynamic device has:
   an air flow guiding element, which is pivotally connected to the rotor blade wall in the mounting section, and
   a linearly operating actuator, which is operatively coupled to the air flow guiding element, and which is arranged and configured to adjust an orientation of the air flow guiding element between a first orientation and a second orientation,
wherein the air flow guiding element causes a strongest influence on the portion of an air flow flowing along the suction side from the leading edge section to the trailing edge section of the rotor blade when the air flow guiding element is in its second orientation, and causes a weakest or substantially no influence on the portion of the air flow when the air flow guiding element is in its first orientation, and
wherein the actuator has a configuration, which comprises at least one dielectric electroactive polymer (DEAP) film that is sandwiched between a first electrode layer and a second electrode layer associated with the film, and which is configured to be actuated by applying an electric voltage difference to the first and the second electrode layer such that the air flow guiding element assumes a position between the first and the second orientation.

In such a rotor blade, the aerodynamic device is configured for controlling a lift of the rotor blade by influencing a portion of an air flow across the suction side between the leading edge section and the trailing edge section of the rotor blade.

In an exemplary embodiment of the first embodiment example, the DEAP film is a dielectric elastomer (DE) film.

In an exemplary embodiment of the first embodiment example, the operative coupling of the linearly operating actuator to the air flow guiding element is a direct operative coupling, i.e. a coupling without an intermediate element or an intermediate structure, which is provided to change a direction of the actuation and/or to change a lever arm corresponding to a stroke of the actuation.

According to a second embodiment example of the present disclosure, there is provided a method of operating a wind turbine,
wherein the wind turbine comprises a rotor blade, which has a rotor blade wall, which forms an outer envelope of the rotor blade and extends between a leading edge section of the rotor blade and a trailing edge section of the rotor blade, and which provides a mounting section arranged on a suction side of the rotor blade and for accommodating an aerodynamic device,
wherein the aerodynamic device has an air flow guiding element, which is pivotally connected to the rotor blade wall in the mounting section, and a linearly operating actuator, which is arranged and configured to adjust an orientation of the air flow guiding element between a first orientation and a second orientation, wherein the actuator has a configuration, which comprises at least one dielectric electroactive polymer (DEAP) film that is sandwiched between a first electrode layer and a second electrode layer associated with the film;
wherein the method has:
   applying an electrical voltage difference to the first and the second electrode layers so that the configuration of the DEAP film is actuated such that the air flow guiding element assumes a first adjusted orientation between the first orientation of the air flow guiding element and the second orientation of the air flow guiding element;
   wherein the air flow guiding element causes a strongest influence on the portion of an air flow flowing along the suction side from the leading edge section to the trailing edge section of the rotor blade when the air flow guiding element is in its second orientation, and causes a weakest or substantially no influence on the portion of the air flow when the air flow guiding element is in its first orientation.

According to a third embodiment example of the present disclosure, there is provided a wind turbine, which has a rotor blade according to first embodiment example of the present disclosure, or which is operated according to the method according to second embodiment example of the present disclosure.

The, in particular direct, operative coupling of the linearly operating actuator to the air flow guiding element has the advantage that an intermediate element or an intermediate structure in the coupling between the linearly operating actuator to the air flow guiding element, such as for example the first lever having the first arm pivotable about a first pivot axis and the second arm extending away from the first arm in WO 2010/151230 A1 can be dispensed with. The, in particular direct, operative coupling between the linearly operating actuator and the air flow guiding element thus reduces complexity, weight and/or cost of an existing aerodynamic device for a rotor blade.

In an exemplary embodiment of the first embodiment example, the linearly operating actuator may have a first end section, which may be fixedly arranged relative to the rotor blade wall in the mounting section, and a second end section, which may be substantially linearly movable between a first stroke reversal point and a second stroke reversal point. The first stroke reversal point of the actuator corresponds to the first orientation of the air flow guiding element, and the second stroke reversal point of the actuator corresponds to the second orientation of the air flow guiding element.

In an exemplary embodiment of the first embodiment example, the aerodynamic device is configured for controlling a lift of the rotor blade by influencing a portion of an air flow across the suction side between the leading edge section and the trailing edge section.

In an exemplary embodiment of the first embodiment example, the DEAP film may be actuatable compressively in a thickness direction of the film. In this embodiment, when applying a maximum voltage difference to the first and the second electrode layer, the second end section of the actuator is at the first stroke reversal point, which corresponds to a minimum length of the actuator.

Further in this exemplary embodiment, a configuration of the actuator may be selected from a group of configurations that includes a multi-stack configuration, a folded configuration, a helical configuration, and a twisted configuration. In advantageous implementations, a percentaged stroke of the configuration may be down to -10% for a multi-stack configuration, down to -5% for a folded configuration, down to -15% for a helical configuration, and down to -5,2% for a twisted configuration.

In an alternative exemplary embodiment of the first embodiment example, the DEAP film may be actuatable expandingly in an in-plane direction of the film. In this alternative embodiment, when applying a maximum voltage difference to the first and the second electrode layer, the second end section of the actuator is at the second stroke reversal point, which corresponds to a maximum length of the actuator.

Further in this alternative exemplary embodiment, a configuration of the actuator may be selected from a group of configurations that includes a tubular configuration, a rolled configuration, and a cone configuration. In advantageous implementations, a percentaged stroke of the configuration may be up to 14% for a tubular configuration, and up to 35,8% for a rolled configuration.

In an exemplary embodiment of the first embodiment example, the aerodynamic device may comprise an electrical voltage supply device configured to provide an electrical voltage that may be used to provide the electrical voltage difference applied to the first and the second electrode layers of the linearly operating actuator.

In a first further development of the afore-mentioned exemplary embodiment, in the aerodynamic device, the electrical voltage supply device may be arranged within the rotor blade, in particular in a root section of the rotor blade. In an alternative second further development of the afore-mentioned exemplary embodiment, the electrical voltage supply device may be arranged outside of the rotor blade and elsewhere within the wind turbine, for example in a rotor hub of the wind turbine or in a nacelle of the wind turbine.

In an exemplary embodiment of the first embodiment example, the aerodynamic device may further have an abutment structure, which is fixedly arranged with respect to the rotor blade wall in the mounting section, and to which the first end section of the actuator is fixedly connected. The abutment structure may be arranged inside of the envelope formed by the rotor blade wall such that the first end section of the actuator can be arranged further inside of the rotor blade wall than an inside surface of the rotor blade wall.

In this exemplary embodiment, the abutment structure provides an abutment surface to the first end section of the actuator, wherein an inside depth of the abutment surface, in particular an inside depth with respect to an underside of the air flow guiding element, provided for the first end section of the actuator is great enough such that a stroke, in particular a distance between the first and the second stroke reversal points, of the second end section of the actuator can be great enough such that the air flow guiding element can be pivoted far enough to bridge a great enough difference in its orientation between the first orientation and the second orientation, in particular when taking into account an inherent limitation for the percentaged stroke of the configuration of the DEAP film.

In an exemplary embodiment of the first embodiment example, the second end section of the actuator may be two-dimensionally fixed to an inside surface of the air flow guiding element. In this embodiment, the actuator may also undergo a bending deformation when the second end section performs its linear extension in a direction towards the second stroke reversal point.

In an exemplary embodiment of the first embodiment example, the second end section of the actuator may have a convex surface, an abutment area of which abuts against an inside surface of the air flow guiding element. In this embodiment, the abutment area on the convex surface of the second end section may move over the convex surface when the second end section of the actuator performs its linear extension in a direction towards the second stroke reversal point.

In an exemplary embodiment of the first embodiment example, the second end section of the actuator may have a first bearing configured to connect the second end section to the air flow guiding element. The first bearing allows that a first angle between a longitudinal direction of the actuator and an inside surface of the air flow guiding element changes, when the second end section of the actuator performs its linear extension in a direction towards the second stroke reversal point. In an advantageous further development of this embodiment, in a rotor blade having an abutment structure, the first end section of the actuator may have a second bearing configured to connect the first end section to the abutment structure. The second bearing allows that a second angle between a longitudinal direction of the actuator and an abutment surface of the abutment structure changes, when the second end section of the actuator performs its linear extension in a direction towards the second stroke reversal point.

In an exemplary embodiment of the first embodiment example, when the air flow guiding element is in its first orientation, the air flow guiding element may be arranged within an opening of the rotor blade wall in the mounting section, and an outside surface of the air flow guiding element may be substantially flush with the outside surface of the rotor blade wall in the mounting section.

In an alternative exemplary embodiment of the first embodiment example, when the air flow guiding element is in its first orientation, the air flow guiding element may be arranged outside of the rotor blade wall in the mounting section.

In an advantageous further development of this alternative exemplary embodiment, the aerodynamic device may have a first transition element, which is arranged upstream of the air flow guiding element with respect to the air flow direction, and a second transition element, which is arranged downstream of the air flow guiding element with respect to the air flow direction.

In a further development of this alternative exemplary embodiment, the first transition element is: i) in particular arranged at a side of the aerodynamic device that faces in a direction towards the leading edge section of the rotor blade, ii) extends along a length of the aerodynamic device in the extension direction of the aerodynamic device, and iii) tapers from a thickness corresponding to the height, by which the air flow guiding element protrudes from the outside surface of the rotor blade wall, in the direction towards the leading edge section of the rotor blade and/or perpendicular to the extension direction away from the air flow guiding element.

In a further development of this alternative exemplary embodiment, the second transition element is: i) in particular arranged at a side of the aerodynamic device that faces in a direction towards the trailing edge section of the rotor blade, ii) extends along a length of the aerodynamic device in the extension direction of the aerodynamic device, and iii) tapers from a thickness corresponding to the height, by which the air flow guiding element protrudes from the outside surface of the rotor blade wall, in the direction towards the trailing edge section of the rotor blade and/or perpendicular to the extension direction away from the air flow guiding element.

In an exemplary embodiment of the first embodiment example, the rotor blade extends longitudinally along a rotor blade length axis from a root of the rotor blade to a tip of the rotor blade. Furthermore, the aerodynamic device extends longitudinally in an extension direction, which is substantially parallel to, or at an acute angle with, the rotor blade length axis.

In an elaborated implementation of this embodiment, the aerodynamic device may be subdivided in its extension direction in a plurality of sectional aerodynamic devices, which are mutually neighbouring each other. Furthermore, each sectional aerodynamic device may have a section-associated air flow guiding element and a section-associated linearly operating actuator.

In an alternative elaborated implementation of this embodiment, the aerodynamic device may have a continuous air flow guiding element, which may extend continuously in the extension direction, and may further have at least one of the following:
i) one single linearly operating actuator, which is arranged longitudinally at or near a centre of the continuous air flow guiding element in the extension direction,
ii) two linearly operating actuators, wherein a first linearly operating actuator is arranged longitudinally with respect to a centre of the continuous air flow guiding element in the extension direction closer to the root of the rotor blade, and a second linearly operating actuator is arranged longitudinally with respect to a centre of the continuous air flow guiding element in the extension direction closer to the tip of the rotor blade,
iii) more than two linearly operating actuators, which are distributed along the extension direction and are mutually spaced at a distance from each other in the extension direction.

In an exemplary embodiment of the second embodiment example, the method further has varying the electrical voltage difference applied to the first and the second electrode layers, so that the air flow guiding element changes its orientation, in particular continuously, from the first adjusted orientation so as to assume a second adjusted orientation between the first orientation and the second orientation.

In an exemplary embodiment of the second embodiment example, the method further has controlling, by the aerodynamic device, a lift of the rotor blade by influencing a portion of an air flow across the suction side between the leading edge section and the trailing edge section of the rotor blade.

In an exemplary embodiment of the second embodiment example, the DEAP film may be a dielectric elastomer film.

In an exemplary embodiment of the second embodiment example, the DEAP film may be actuatable compressively in a thickness direction of the film, and the method may further have applying a maximum voltage difference to the first and the second electrode layer, such that the second end section of the actuator is at the first stroke reversal point, which corresponds to a minimum length of the actuator.

In an alternative exemplary embodiment of the second embodiment example, the DEAP film may be actuatable expandingly in an in-plane direction of the film, and the method may further have applying a maximum voltage difference to the first and the second electrode layer, such that the second end section of the actuator is at the second stroke reversal point, which corresponds to a maximum length of the actuator.

According to a third embodiment example of the present disclosure, there is provided a wind turbine, which comprises a rotor blade according to the first embodiment example of the present disclosure and/or which is operated using the method according to the second embodiment example of the present disclosure.

### Brief description of the drawings

In the following, embodiment examples of the present disclosure are described in detail with reference to the following drawings.

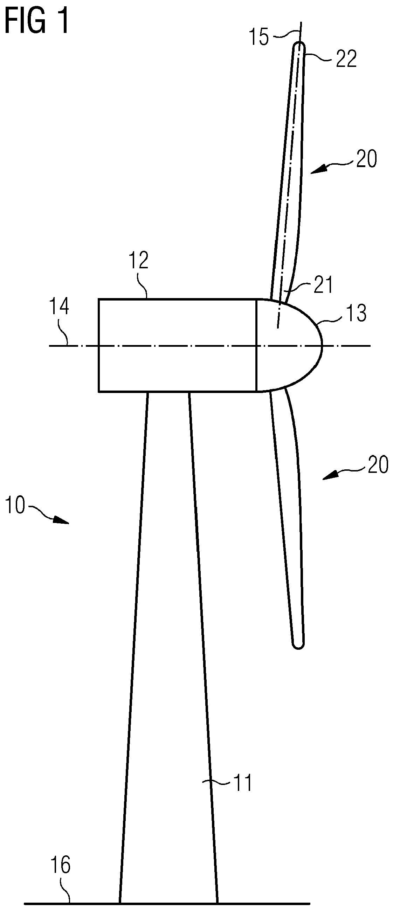

**Fig. 1** shows a schematic side view of a wind turbine having rotor blades according to the first embodiment example of the present invention.

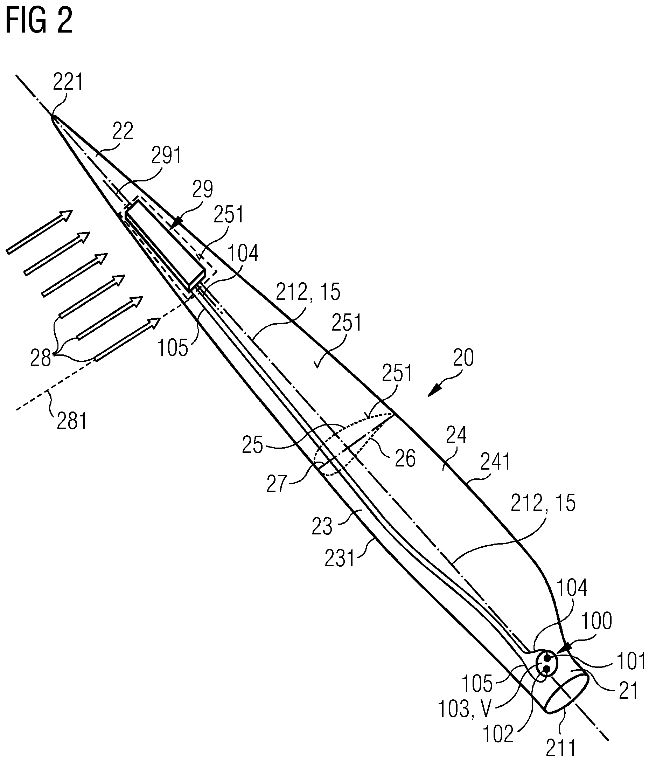

**Fig. 2** shows a perspective view of a rotor blade for a wind turbine, having an aerodynamic device, according to the first embodiment example of the present invention.

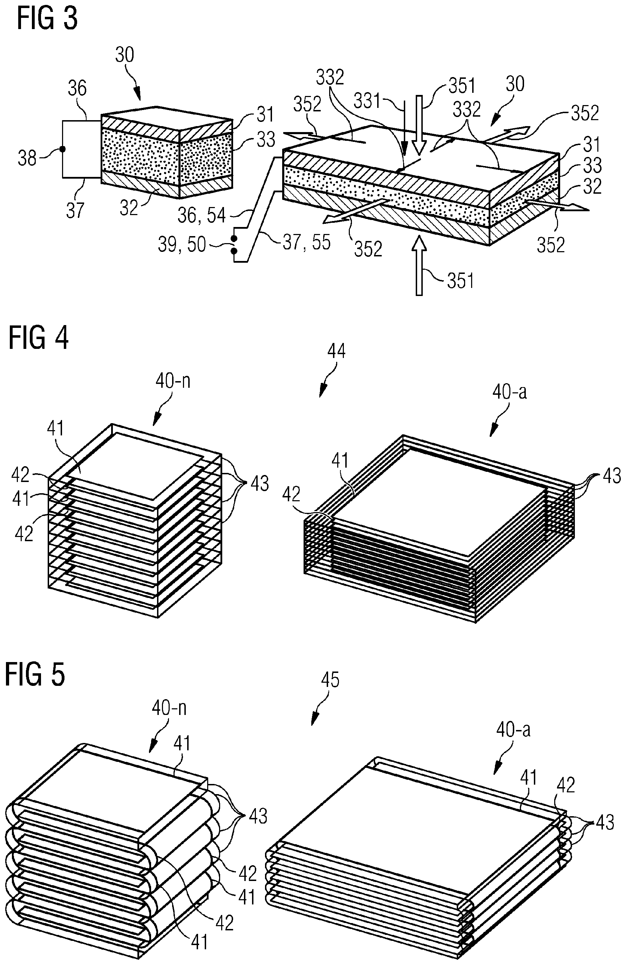

**Fig. 3** shows, in the left portion, a schematic perspective view of a conventional actuator having a dielectric electroactive polymer film, which is sandwiched between a pair of electrode layers, in a relaxed, i.e. non-actuated, state, and in the right portion, a schematic perspective view of the same conventional actuator in an actuated, deformed state, wherein the activation comprises a compression in a thickness direction and an expansion in an in-plane direction.
Fig. 4 shows, in the left portion, a schematic perspective view of a conventional actuator in a multi-stack configuration, which has a plurality of dielectric electroactive polymer films, which are each sandwiched between a pair of electrode layers, which are in a relaxed, i.e. non-actuated, state, and which are arranged and configured to perform a compression in a thickness direction upon actuation. Fig. 4 further shows, in the right portion, a schematic perspective view of the same conventional actuator in an actuated, compressed state.
Fig. 5 shows, in the left portion, a schematic perspective view of a conventional actuator in a folded configuration, which has a dielectric electroactive polymer film, which is sandwiched between a pair of electrode layers, which is in a relaxed, i.e. non-actuated, state, and which is arranged and configured to perform a compression in a thickness direction upon actuation. Fig. 5 further shows, in the right portion, a schematic perspective view of the same conventional actuator in an actuated, compressed state.

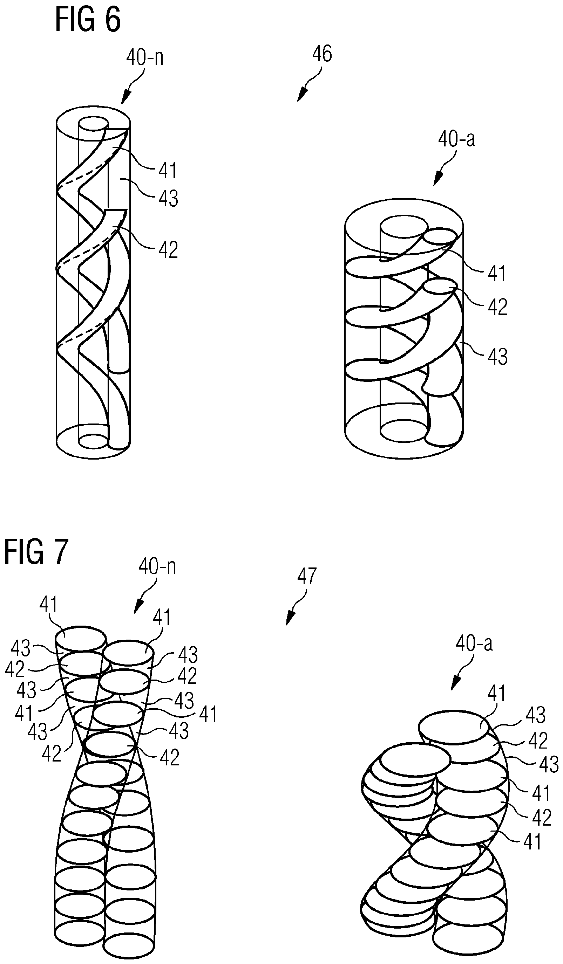

Fig. 6 shows, in the left portion, a schematic perspective view of a conventional actuator in a helical configuration, which has a dielectric electroactive polymer film, which is sandwiched between a pair of electrode layers, which is in a relaxed, i.e. non-actuated, state, and which is arranged and configured to perform a compression in a thickness direction upon actuation. Fig. 6 further shows, in the right portion, a schematic perspective view of the same conventional actuator in an actuated, compressed state.
Fig. 7 shows, in the left portion, a schematic perspective view of a conventional actuator in a twisted configuration, which is a further development of the multi-stack configuration of Fig. 4, which has two mutually twisted multi-stack configurations, each having a dielectric electroactive polymer film, which is sandwiched between a pair of electrode layers, which is in a relaxed, i.e. non-actuated, state, and which is arranged and configured to perform a compression in a thickness direction upon actuation. Fig. 7 further shows, in the right portion, a schematic perspective view of the same conventional actuator in an actuated, compressed state.

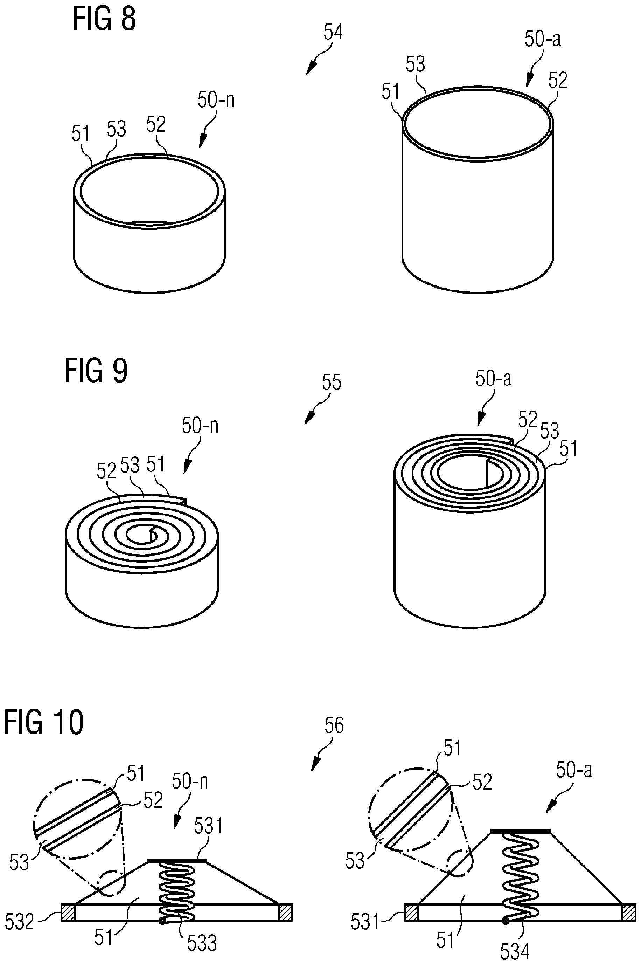

**Fig. 8** shows, in the left portion, a schematic perspective view of a conventional actuator in a tubular configuration, which has a dielectric electroactive polymer film, which is sandwiched between a pair of electrode layers, which is in a relaxed, i.e. non-actuated, state, and which is arranged and configured to perform an expansion in an in-plane direction upon actuation. Fig. 8 further shows, in the right portion, a schematic perspective view of the same conventional actuator in an actuated, expanded state.
**Fig. 9** shows, in the left portion, a schematic perspective view of a conventional actuator in a rolled configuration, which has a dielectric electroactive polymer film, which is sandwiched between a pair of electrode layers and arranged as a roll, which is in a relaxed, i.e. non-actuated, state, and which is arranged and configured to perform an expansion in an in-plane direction upon actuation. Fig. 9 further shows, in the right portion, a schematic perspective view of the same conventional actuator in an actuated, expanded state.
**Fig. 10** shows, in the left portion, a schematic perspective view of a conventional actuator in a cone configuration, which has a cone-shaped dielectric electroactive polymer film, which is sandwiched between a pair of electrode layers, which is in a relaxed, i.e. non-actuated, state and comprises a pre-compressed spring, and which is arranged and configured to perform an expansion in an in-plane direction upon actuation. Fig. 10 further shows, in the right portion, a schematic perspective view of the same conventional actuator in an actuated, expanded state and comprising the spring in a decompressed state.

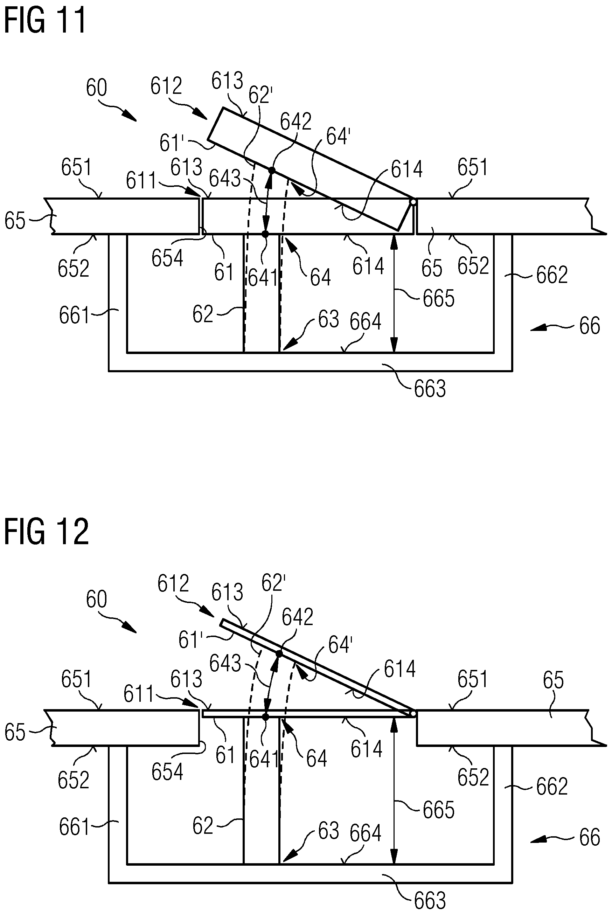

**Fig. 11** shows a schematic cross-sectional view of an aerodynamic device according to a first embodiment of the present disclosure, having an abutment structure arranged inside of a rotor blade wall, a linearly operating actuator configured to perform a linear expansion and retraction so as to adjust an orientation of an air flow guiding element, which is arranged in an opening of the rotor blade wall, between a flush first orientation and an inclinedly protruding second orientation, and arranged and configured to undergo a slight bending deformation upon expansion.
**Fig. 12** shows a schematic cross-sectional view of an aerodynamic device according to a second embodiment of the present disclosure, similar to the aerodynamic device of Fig. 11 in many respects and differing substantially in the geometric design of the air flow guiding element.

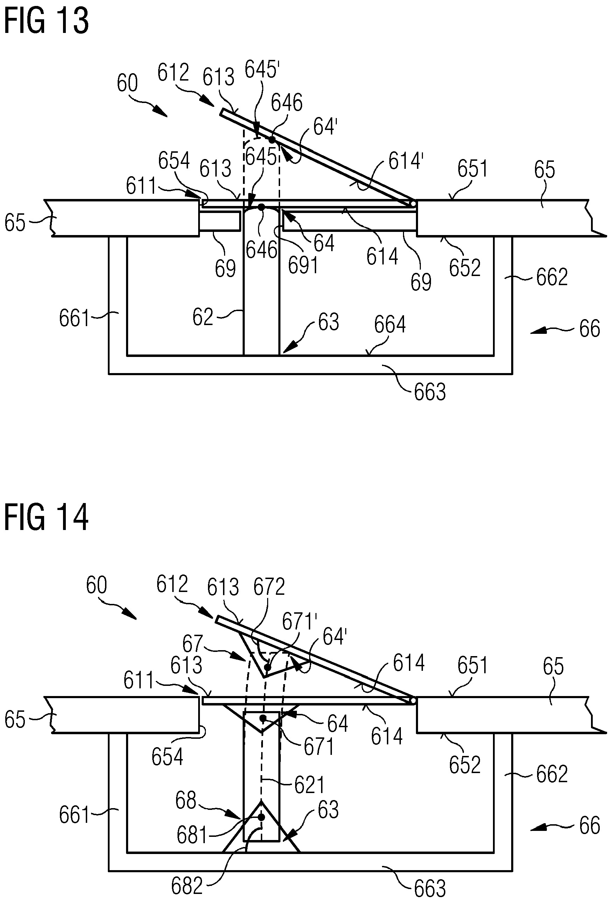

**Fig. 13** shows a schematic cross-sectional view of an aerodynamic device according to a third embodiment of the present disclosure, similar to the aerodynamic device of Fig. 11 in many respects and differing substantially in the coupling of the linearly operating actuator to the air flow guiding element.
**Fig. 14** shows a schematic cross-sectional view of an aerodynamic device according to a fourth embodiment of the present disclosure, similar to the aerodynamic devices of Figs. 11 and 13 in many respects and differing substantially in the coupling of the linearly operating actuator to the air flow guiding element.

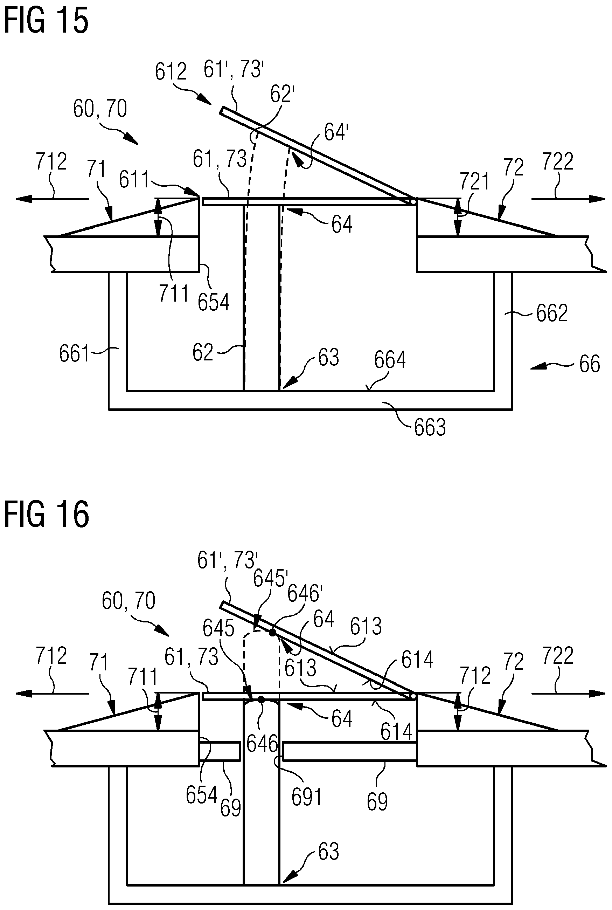

**Fig. 15** shows a schematic cross-sectional view of an aerodynamic device according to a fifth embodiment of the present disclosure, similar to the aerodynamic device of Fig. 11 in many respects and differing substantially in the arrangement of the air flow guiding element with respect to the rotor blade wall.
**Fig. 16** shows a schematic cross-sectional view of an aerodynamic device according to a sixth embodiment of the present disclosure, similar to the aerodynamic device of Fig. 13 in many respects and differing substantially in the arrangement of the air flow guiding element with respect to the rotor blade wall.

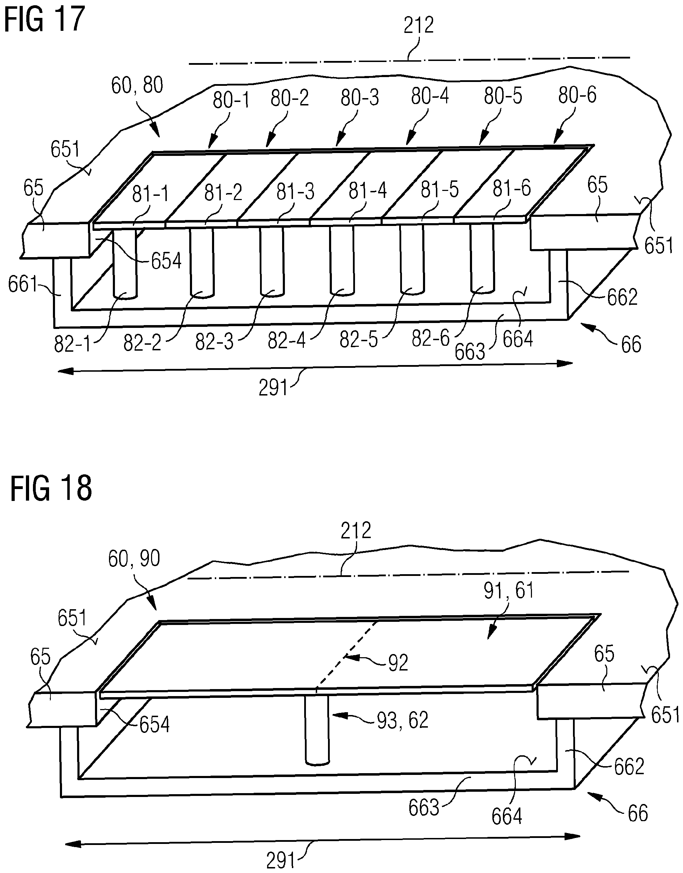

**Fig. 17** shows a schematic perspective view of an aerodynamic device according to a seventh embodiment of the present disclosure, which differs from the aerodynamic devices of Figs. 11 to 16 in that it is sub-divided in its extension direction in a plurality of sectional aerodynamic devices.
**Fig. 18** shows a schematic perspective view of an aerodynamic device according to an eighth embodiment of the present disclosure, which is characteristic in that it extends in its extension direction while comprising one single linearly operating actuator arranged at a centre of the longitudinal extension.

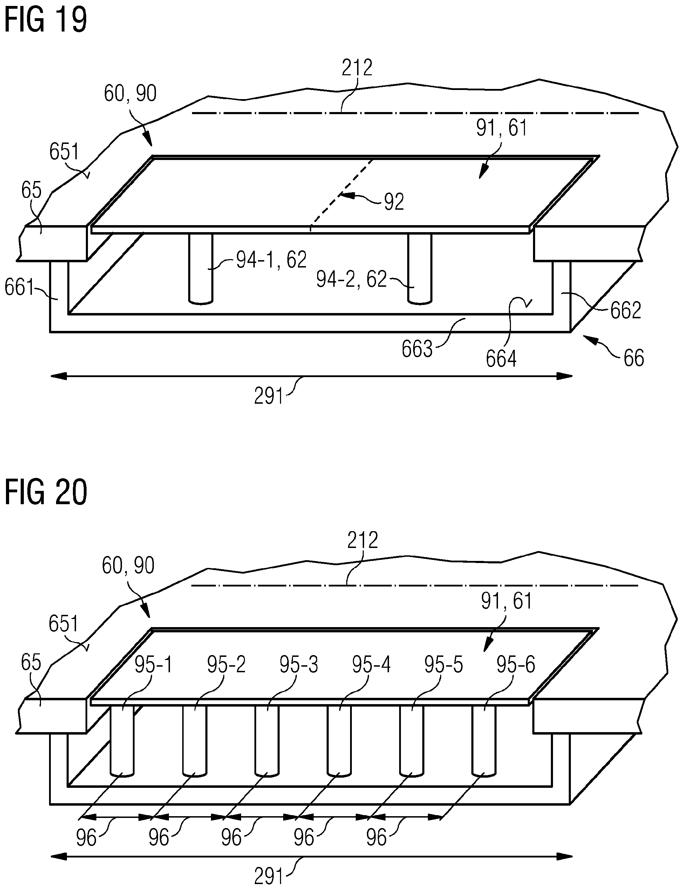

**Fig. 19** shows a schematic perspective view of an aerodynamic device according to a ninth embodiment of the present disclosure, which differs from the aerodynamic device of Fig. 18 in that it extends in its extension direction while comprising two linearly operating actuators arranged at opposite sides with respect to a centre of the longitudinal extension.
**Fig. 20** shows a schematic perspective view of an aerodynamic device according to a tenth embodiment of the present disclosure, which differs from the aerodynamic devices of Figs. 18 and 19 in that it extends in its extension direction while comprising more than two linearly operating actuators arranged along the longitudinal extension.

Similar or like components in different figures are provided with the same reference numerals, or with reference numerals that differ only at the second and if applicable third decimal position. The figures are not necessarily drawn to scale, and are schematic.

### Detailed description of embodiments

**Fig. 1** shows a schematic side view of a wind turbine 10 having rotor blades 20 according to the first embodiment example of the present invention.

The wind turbine 10 is for generating electricity, and comprises a tower 11, a nacelle 12, a generator (not shown), a rotor hub 13, and rotor blades 20. At the opposite end of the tower 11 there is mounted a nacelle 12. The tower 11 is mounted on the ground 16 by one end. The nacelle 12 is usually mounted rotatable with regard to the tower 11, which is referred to as comprising a yaw axis substantially perpendicular to the ground 16. The nacelle 12 usually accommodates the generator of the wind turbine and the gear box (if the wind turbine is a geared wind turbine). The hub 13 is rotatable about a substantially horizontal rotor axis 14. The hub 13 is often described as being a part of the rotor, wherein the rotor is capable to transfer the rotational energy to the generator.

The hub 13 is the part, at which the rotor blades 20 are mounted. Each rotor blade 20 is usually mounted pivotable to the hub 13. In other words, the rotor blades 20 can be pitched about a pitch axes 15, respectively. Pitching the rotor blades 20 may improve the control of the wind turbine 10 and in particular of the rotor blades by the possibility of modifying the direction, at which the air flow or wind is hitting the rotor blades 20. Each rotor blade 20 is mounted to the hub 13 at its root section 21. The root section 21 is opposed to a tip section 22 of the rotor blade. Note that in the example as shown in Figure 1, only two rotor blades 20 are depicted. However, most modern wind turbines 10 comprise three rotor blades 20.

**Fig. 2** shows a perspective view of a rotor blade 20 for a wind turbine 10, having an aerodynamic device 29, according to the first embodiment example of the present invention.

The rotor blade 20 comprises a root section 21 with a root 211 and a tip section 22 with a tip 221. The rotor blade 20 furthermore comprises an airfoil section which is characterized in that it is able to generate lift and comprises a suction side 25 and a pressure side 26. The airfoil shape of the airfoil portion is symbolized by one airfoil profile which is shown as a dotted line in Figure 2 and which illustrates the cross-sectional shape of the rotor blade at this spanwise position. It is noted that the suction side 25 is divided or separated from the pressure side 26 by a chord line 27, which connects the leading edge 241 with the trailing edge 231 of the rotor blade 20. It is also noted that the area around the trailing edge 231 is commonly referred to as the trailing edge section 23 of the rotor blade 20. Likewise, the area around the leading edge 241 is commonly referred to as the leading edge section 24.

A feature which distinguishes the rotor blade 20 as illustrated in Figure 2 from a standard prior art rotor blade is the provision of the aerodynamic device 29 according to the first embodiment example of the present disclosure. The aerodynamic device 29 is arranged substantially along the length axis of the rotor blade, which is defined as the axis from the root 211 to the tip 221 of the rotor blade 20. In the example shown in Figure 2, the aerodynamic device 29 extends over more than ten percent, preferably over more than fifteen percent, more preferably over more than twenty percent, of the length of the rotor blade 20.

The aerodynamic device 29 in Figure 2 has an air flow guiding element 61, which is pivotably movable by means of a linearly operating actuator 62, as will be shown and described in more detail below with respect to Figures 11 to 16.

With reference to Fig. 2, it is to be understood that according to the first embodiment example of the present invention, there is provided a rotor blade 20 for a wind turbine 10, wherein the rotor blade 20 has an aerodynamic device 29, which is controllable in respect of a strength of its influence on the air flow 28, which flows on a suction side 25 of the rotor blade 20 between the leading edge section 23 of the rotor blade 20 and the trailing edge section 24 of the rotor blade 20. In other words, the aerodynamic device 29 is configured to control the lift of the rotor blade 20.

The rotor blade wall 251 forms an outer envelope of the rotor blade 20 and extends between a leading edge section 23 of the rotor blade and a trailing edge section 24 of the rotor blade, and provides a mounting section 252 arranged on a suction side 25 of the rotor blade 20 and for accommodating the aerodynamic device 29

With a pulled-up reference to Figs. 11 to 20 below, a general description of the aerodynamic device 29 will be provided. It is common to all embodiments of the aerodynamic device 29 disclosed herein and shown in Figs. 11 to 20 that the aerodynamic device 29 has an air flow guiding element 61, which is pivotally connected to the rotor blade wall 251, 65 in the mounting section 252, and a linearly operating bending actuator 62, which is operatively coupled to the air flow guiding element 61, and which is arranged and configured to adjust an orientation of the air flow guiding element 61 between a first orientation 611 and a second orientation 612. The air flow guiding element 61 causes a strongest influence on the portion of the air flow when the air flow guiding element 61 is in its second orientation 612, and causes a weakest or substantially no influence on the portion of the air flow when the air flow guiding element 61 is in its first orientation 611.

Such an aerodynamic device 29, 60 is configured for controlling a lift of the rotor blade 20 by influencing a portion of an air flow 28 across the suction side 25 between the leading edge section 23 and the trailing edge section 24 of the rotor blade.

It is also common to all embodiments of the aerodynamic device 29 disclosed herein and shown in Figs. 11 to 20 that the linearly operating actuator 62 has a configuration (for example referenced 44, 45, 46 and 47, respectively, in Figures 4, 5, 6 and 7 below, and referenced 54, 55 and 56, respectively, in Figures 8, 9 and 10), which configuration comprises at least one dielectric electroactive polymer (DEAP) film (for example referenced 43 or 53 in Figs. 4 to 10), which is sandwiched between a first electrode layer (for example referenced 41 or 51 in Figs. 4 to 10) and a second electrode layer (for example referenced 42 or 52 in Figs. 4 to 10) associated with the film. The DEAP film 43, 53 is configured to be actuatable by applying an electric voltage difference to the first and the second electrode layer. Due to the coupling of the linearly operating actuator 62 to the air flow guiding element 61, when an electric voltage difference is applied to the first and the second electrode layer, the air flow guiding element 61 assumes a first adjusted orientation between the first orientation 611 of the air flow guiding element 61 and the second orientation 612 of the air flow guiding element 61.

Before embodiments of the aerodynamic device 29 according to the first embodiment example of the present disclosure will be described further below with reference to Figs. 11 to 20, basic aspects of the functioning of the linearly operating actuator 30 comprising a dielectric electroactive polymer (DEAP) as an actuatable material will be described with reference to Fig. 3. Then, different basic configurations 44 to 47 and 54 to 56 of the linearly operating actuator will be described, respectively, with reference to Figs. 4 to 7 and Figs. 8 to 10.

**Fig. 3** shows, in the left portion, a schematic perspective view of a conventional actuator 30 having a dielectric electroactive polymer film 33, which is sandwiched between a pair of electrode layers 31 and 32, in a relaxed, i.e. non-actuated, state. Fig. 3 further shows, in the right portion, a schematic perspective view of the same conventional actuator 30 in an actuated, deformed state, wherein the activation comprises a compression 351 in a thickness direction 331 and an expansion 352 in an in-plane direction 332.

The conventional actuator 30 comprises a first electrode layer 31, a second electrode layer 32, and film 33 made of a dielectric electroactive polymer (DEAP). The film 33 is sandwiched between the first electrode layer 31 and the second electrode layer 32. An electrical voltage difference 39 can be applied to, and/or between, the first electrode layer 31 and the second electrode layer 32. The electrical voltage difference 39 is provided by an electrical voltage supply device 50. In result of applying the electric voltage difference, an electric field is created in the space between the first electrode layer 31 and the second electrode layer 32, which electric field acts on the DEAP film 33 and puts the DEAP film 33 in an actuated state and according actuated shape, as shown in the right-hand portion of Fig. 3. Alternatively, no electrical voltage difference 39 can be provided to the first electrode layer 31 and the second electrode layer 32, which can be achieved securely by providing a short-circuit 39 between the first electrode layer 31 and the second electrode layer 32, in result of which the DEAP film 33 relaxes and assumes a relaxed, non-actuated state and according non-actuated shape, as shown in the left-hand portion of Fig. 3.

In Fig. 3, the electrical voltage difference 39 is supplied by an electrical voltage supply system (also illustrated in Fig. 2), which comprises an electrical voltage supply device 100, 39, a first electric line 104, 36 connecting a pole of the electrical voltage supply device 100, 39 to the first electrode layer 31 and a second electric line 105, 37 connecting the other pole of the electrical voltage supply device 100, 39 to the respective second electrode layer 32.

The electrical voltage supply system of the aerodynamic device 29 is furthermore also disclosed in Fig. 2. As shown in Fig. 2, the electrical voltage supply system comprises an electrical voltage supply device 100, which comprises a first electrode 101 and a second electrode 102 and is configured to provide an electrical voltage difference 103 or V_{DC}. The electrical voltage supply system further comprises a first electric line 104 connected between the first electrode 101 of the electrical voltage supply device 100 (see Fig. 2) and the first electrode layer 31 in Fig. 3, and a second electric line 105 connected between the second electrode 102 of the electrical voltage supply device 100 (see Fig. 2) and the second electrode layer 32 in Fig. 3. The first and the second electric lines 104, 105 provide an electrical voltage, in particular an electrical voltage difference V (indicated at 103 in Fig. 2 and at 39 in Fig. 3), to the electroactive polymer actuator of the aerodynamic device 29.

In the example shown in Figure 2, the electrical voltage supply device 100 is located in the rotor blade 20, in particular in the root section 21 of the rotor blade 20. However, a person skilled in the art is well aware that the electrical voltage supply device 100 could also be placed elsewhere in the wind turbine 10, such as for example in the hub 13 of the wind turbine 13 or in the nacelle 15 of the wind turbine 10.

The application of an electric field to the DEAP film 33, in the space between the first electrode layer 31 and the second electrode layer 32, causes the generation of an electrostatic restrictive force between the mutually opposite main surfaces of the DEAP film 33, due to which the DEAP film 33 will undergo a compression 351 of the DEAP material in the thickness direction 331 of the DEAP film 33. Since the DEAP material is incompressive, the compression 351 in the thickness direction 331 is transformed into and/or results in an expansion 352 of the DEAP material in the in-plane directions 332 of the DEAP film 33. Actuators, the functioning of which is based on these principles and properties of DEAP, i.e. dielectric electroactive polymer, materials, have been used in conventional rigid body robots.

DEAPs are polymer materials, in which the actuation is caused by electrostatic forces between two electrodes, which squeeze the polymer material. As is known to a skilled person, dielectric electroactive polymers are capable of very high strains and are fundamentally a capacitor that changes its capacitance when a voltage difference is applied, thereby causing the polymer to compress in thickness and expand in area due to the electric field, as illustrated in Fig. 3. DEAPs typically requires a large actuation voltage to produce a high electric field (hundreds of thousands of volts), but very low electrical power consumption. DEAPs require no power to keep the actuator at a given position. DEAPs work in dry conditions. Accordingly, DEAP-based actuators, i.e. the assembly of a DEAP film sandwiched between a pair of electrode layers, and optionally formed in a particular mechanical configuration (refer to Figs. 4 to 10), need to be wrapped in, or enclosingly sealed by, an insulation layer for holding off humidity and/or water. Dielectric EAPs are very fast in responding, exhibit relatively large activation stresses and can hold the induced displacement under DC activation. Examples of EAP are electrorestrictive polymers and dielectric elastomers. In particular, the latter can be advantageously used in linearly operating actuators that may be employed in aerodynamic devices according to the present disclosure.

A recent robot design paradigm shift has taken place from conventional rigid body robots to soft robots having compliant bodies. This shift has been enabled by the discovery and development of dielectric elastomer (DE) materials as a type of DEAP materials. DE materials are softer and more flexible than DEAP materials, and have enabled the way to developing soft actuators for use in soft robots.

For DE materials, which are considerably softer and more flexible than DEAP materials, the generation of an electrostatic restrictive force between the mutually opposite main surfaces of the DE film 33 in result of the application of an electric voltage difference between the first electrode layer 31 and the second electrode layer 32 results in a considerably more pronounced elastic deformation of a DE film 33, including a considerably more pronounced compression 351 of the DE material in the thickness direction 331 of the DE film 33, and a considerably more pronounced expansion 352 of the DE material in the in-plane directions 332 of the DE film 33, as indicated in the right-hand portion of Fig. 3. When the material of the film is a DE material, the first and second electrode layers must also be compliant in order be capable to undergo a considerable deformation according to the considerable deformation, in particular the in-plane expansion, of the DE material when assuming an activated state.

The selection of DE material is one of the key factors for DE actuators. To enhance the properties of DE actuators, the DE material should have a low elastic modulus, low viscosity, high dielectric constant and high electric breakdown strength. Many DE materials have been tested, and in result, acrylic elastomers, polyurethanes, and silicone elastomers are most commonly used. DE materials of the acrylic elastomer type have been found that show a percentaged strain over 380%. Pre-strain is also an important factor of DE materials to improve actuation performance. Pre-strain can improve breakdown strength and mechanical stability, but can also cause a decrease in the dielectric constant.

Compliant electrodes are also an important factor to achieve the enhanced performance of DE material and DE material-based actuators. For use in DE material-based actuators, the compliant electrodes should have high electric conductivity, strong adhesion to most DE materials, good stability and be highly compliant. As of the present, the most commonly used compliant electrodes are formed of carbon grease, carbon black, and graphite. Such electrodes are cheap, have high conductivity, and are easy to use; however, they have an instability problem in the case of long-term use, as carbon black and graphite can be detached from the DE materials, and oil in carbon grease can become dry. Recently, silver nanowires and single-walled carbon nanotubes have become promising transparent compliant electrodes for DE materials, as they have high stretchability and conductivity while remaining highly transparent. Ionic conductors are also considered promising candidates as transparent compliant electrodes for DE material-based actuators, as they have lower resistance than other transparent electronic conductors, such as silver nanowires and single-walled carbon nanotubes, as large deformation.

In summary, it is understood that a DEAP film 33 may be actuatable compressively, i.e. undergo a compression 351 in a thickness direction 331 of the film 33. In particular, a DE film 33 may be actuatable compressively, thereby undergoing a pronounced compression 351 in a thickness direction 331 of the film 33. Actuators based on this type of compressive actuation and decompressed non-actuation may be implemented in a variety of configurations, in particular in different mechanical and/or geometrical configurations, basic types of which are described in the following and illustrated in Figs. 4 to 7.

Alternatively, a DEAP film 33 may be actuatable expandingly, i.e. undergo an expansion 321 in in-plane directions 332 of the film 33. In particular, a DE film 33 may be actuatable expandingly, thereby undergoing a pronounced expansion 351 in in-plane directions 332 of the film 33. Actuators based on this type of expansive actuation and non-expanded non-actuation may be implemented in a variety of configurations, in particular in different mechanical and geometrical configurations, basic types of which are described further below and illustrated in Figs. 8 to 10.

**Fig. 4** shows, in the left portion, a schematic perspective view of a conventional non-actuated actuator 40-n in a so-called multi-stack configuration 44, which has a plurality of dielectric electroactive polymer films 43, which are each sandwiched between a pair of electrode layers 41 and 42, which are in a relaxed, i.e. non-actuated, state, and which are arranged and configured to perform a compression in a thickness direction upon actuation. Fig. 4 further shows, in the right portion, a schematic perspective view of the same conventional actuated actuator 40-a in an actuated, compressed state.

A multi-stack DE actuator is fabricated by stacking multiple electrodes and elastomers in order to increase the percentaged stress (or stroke). Using this configuration, over 100% of strain have been reported to have been obtained by the actuation of more than 100 layers in this configuration. A percentaged stroke has been reported to be down to -10% for a multi-stack configuration 44.

On the other hand, as the number of layers increases, fabrication becomes more difficult. To solve this problem, a configuration involving folding of one DE in half, so that the effect of two layers can be achieved with one electrode pair was proposed.

In the multi-stack configuration 44 illustrated in Fig. 4, when the number of layers increases, fabrication becomes more difficult.

**Fig. 5** shows, in the left portion, a schematic perspective view of a conventional actuator 40-n in a folded configuration 45, which has a dielectric electroactive polymer film 43, which is sandwiched between a pair of electrode layers 41 and 42, which is in a relaxed, i.e. non-actuated, state, and which is arranged and configured to perform a compression in a thickness direction upon actuation. Fig. 5 further shows, in the right portion, a schematic perspective view of the same conventional actuator 40-a in an actuated, compressed state.

To solve the problem in multi-stack configuration that fabrication becomes more difficult as the number of layers increases, a configuration was proposed involving folding of one DE in half, so that the effect of two layers can be achieved with one electrode pair. This lead to the folded configuration 45, which is illustrated in Fig. 5.

The configuration 45 of a folded actuator is similar to the configuration 44 of a multi-stack actuator, but the complexity and time of fabrication is reduced efficiently by folding a single, long DE actuator of the type shown in Fig. 3 multiple times, as illustrated in Fig. 5. A percentaged stroke has been reported to be down to -5% for a folded configuration 45.

Other fabrication methods, which simplify the process with monolithic fabrication have been proposed as well. This lead to the helical configuration 46 illustrated in Fig. 6 and to the twisted configuration 47 illustrated in Fig. 7.

**Fig. 6** shows, in the left portion, a schematic perspective view of a conventional actuator 40-n in a helical configuration 46, which has a dielectric electroactive polymer film 43, which is sandwiched between a pair of electrode layers 41 and 42, which is in a relaxed, i.e. non-actuated, state, and which is arranged and configured to perform a compression in a thickness direction upon actuation. Fig. 6 further shows, in the right portion, a schematic perspective view of the same conventional actuator 40-a in an actuated, compressed state.

A helical configuration 46 has a structure, in which a compliant electrode is inserted between two identical pitch helical elastomers. A percentaged stroke has been reported to be down to -15% for a helical configuration 46.

The electrode pair in the axial direction expands in the radial direction due to a contraction strain in the axial direction created upon activation, as illustrated in the right-hand portion of Fig. 5. The helical configuration allows to reduce fabrication time more than a multi-stack actuator configuration because of the reduced number of elastomers. However, a limit to elastomer thickness exists due to a blade fabrication method.

**Fig. 7** shows, in the left portion, a schematic perspective view of a conventional actuator 40-n in a twisted configuration 47, which has two mutually twisted multi-stack configurations, each having a dielectric electroactive polymer film 43, which is sandwiched between a pair of electrode layers 41 and 42, which is in a relaxed, i.e. non-actuated, state, and which is arranged and configured to perform a compression in a thickness direction upon actuation. Fig. 7 further shows, in the right portion, a schematic perspective view of the same conventional actuator 40-a in an actuated, compressed state.

The twisted configuration 47 illustrated in Fig. 7 is a further development of the multi-stack configuration of Fig. 4. The twisted configuration 47 is fabricated by twisting two cylindrical multi-stack actuators. The two spiral actuators contract upon activation to create strain as the helix angle changes. The actuator in twisted configuration 47 solves a vulnerability issue of an actuator in multi-stack configuration 44. The twisted configuration 47 is more stable to an external force than the multi-stack configuration 44. A percentaged stroke has been reported to be down to -15% for a twisted configuration 47.

**Fig. 8** shows, in the left portion, a schematic perspective view of a conventional actuator 50-n in a tubular configuration 54, which has a dielectric electroactive polymer film 53, which is sandwiched between a pair of electrode layers 51 and 52, which is in a relaxed, i.e. non-actuated, state, and which is arranged and configured to perform an expansion in an in-plane direction upon actuation. Fig. 8 further shows, in the right portion, a schematic perspective view of the same conventional actuator 50-a in an actuated, expanded state.

An actuator 50-n, 50-a in the tubular configuration 54 has a cylindrical tube formed of a DEAP or DE film 53, wherein an outside of the DE film 53 based tube is covered by a compliant first electrode layer 51, and an inside of the DE film 53 based tube is covered by a compliant second electrode layer 52. Due to a contracting of the film 53 in the radial direction, which represents the thickness direction of the film 53, this actuator performs a linear expansion in the axial direction of the tube. A tubular configuration 54 has one film 53 layer in the radial direction, which makes it difficult to obtain a high Maxwell stress. Therefore, also a tubular actuator with multiple films 53 (not shown) has been proposed, to increase the force and the strain. Additional structures (not shown) may further be used, for example a compressed spring (not shown) arranged inside the film 53, to improve the performance. A percentaged stroke of the tubular configuration 54 has been reported to be up to 14%

**Fig. 9** shows, in the left portion, a schematic perspective view of a conventional actuator 50-n in a rolled configuration 55, which has a dielectric electroactive polymer film 53, which is sandwiched between a pair of electrode layers 51 and 52 and arranged as a roll, which is in a relaxed, i.e. non-actuated, state, and which is arranged and configured to perform an expansion in an in-plane direction upon actuation. Fig. 9 further shows, in the right portion, a schematic perspective view of the same conventional actuator 50-a in an actuated, expanded state.

An actuator in the rolled configuration 55 is fabricated by rolling a single long layer, which has the effect of superposing Maxwell stress, like in the multi-stack configuration 44, for a same working voltage difference. Reportedly, more than 10% percentaged strain has been obtained with the basic configuration 55 of the rolled actuator. Like for the tube configuration 54, also for the rolled configuration 55 there has been proposed to arrange a compressed spring (not shown) inside the film 53. A percentaged stroke of such pretensioned rolled configuration 55 has been reported to be up to 35,8%.

**Fig. 10** shows, in the left portion, a schematic perspective view of a conventional actuator 50-n in a cone configuration 56, which has a cone-shaped dielectric electroactive polymer film 53, which is sandwiched between a pair of electrode layers 51 and 52, which is in a relaxed, i.e. non-actuated, state and comprises a pre-compressed spring 533, and which is arranged and configured to perform an expansion in an in-plane direction upon actuation. Fig. 10 further shows, in the right portion, a schematic perspective view of the same conventional actuator 50-a in an actuated, expanded state and comprising the spring 533 in a decompressed state.

The cone configuration 56 is a configuration, in which the DE material film 53 is arranged inside of an outer, in particular annular, rigid frame 531. Furthermore, an inner, in particular disc-shaped, rigid frame 532 may be provided, around which the DE material film 53 may be arranged. The DE material film 53 is formed in a shape of a cone, wherein an outside of the DE film 53 based cone is covered by a compliant first electrode layer 51, and an inside of the DE film 53 based cone is covered by a compliant second electrode layer 52. A pre-compressed spring 533 may be provided in the centre area of the cone along the axial direction of the cone in a relaxed, non-activated actuator 50-n in order to increase the expansion and/or stroke performance upon activation, i.e. applying an electrical voltage difference between the outside first electrode layer 51 and the inside second electrode layer 52.

As a further development of the cone configuration 56, an actuator in a double-cone configuration (not shown), which comprises two antagonistic cone actuators, has been proposed, for example to increase performance, for example regarding stroke.

Having described different compressively actuatable basic configurations 44 to 47 of linearly operating actuators 40-a with reference to Figs. 4 to 7, and different expandingly actuatable basic configurations 54 to 56 of linearly operating actuators 50-a with reference to Figs. 8 to 10, applications of such linearly operating actuators will be described in the following, in particular in different embodiments of an aerodynamic device 29, as illustrated in Figs. 11 to 20.

**Fig. 11** shows a schematic cross-sectional view of an aerodynamic device 29, 60 according to a first embodiment of the present disclosure. In brief, the aerodynamic device 29, 60 has an abutment structure 66 arranged inside of a rotor blade wall 65, a linearly operating actuator 62 configured to perform a linear expansion and retraction so as to adjust an orientation 611, 612 of an air flow guiding element 61, which is arranged in an opening 654 of the rotor blade wall 65, between a flush first orientation 611 and an inclinedly protruding second orientation 612. The linearly operating actuator 62 is arranged and configured to undergo a slight bending deformation upon expansion.

The aerodynamic device 29, 60 is accommodated in a mounting section 252 located on a suction side 25 of the rotor blade 20 between the leading edge section 23 of the rotor blade and the trailing edge section 24 of the rotor blade 20 (see Fig. 2). The aerodynamic device 29, 60 has an abutment structure 66 that is arranged inside of a rotor blade wall 65, an air flow guiding element 61, 61' that is pivotally connected to the rotor blade wall 251, 65 in the mounting section 252 of the rotor blade wall 251, 65, and a linearly operating actuator 62 that is operatively coupled to the air flow guiding element 61 and that is arranged and configured to adjust an orientation of the air flow guiding element 61, 61' between a first orientation 611 and a second orientation 612.

In the embodiment of the aerodynamic device 29, 60 illustrated in Fig. 11, the air flow guiding element 61, 61' is arranged in an opening 654 of the rotor blade wall 65, at least when it assumes its first orientation 611. Furthermore, the air flow guiding element 61 has a thickness that is substantially equal to the thickness of the rotor blade wall 65 in the mounting section 251 of the rotor blade 20.

When it is in its first orientation 611, the air flow guiding element 61, in particular an outside surface 613 of the air flow guiding element 61, is substantially flush with an outside surface 651 of the rotor blade wall 65. When it is in its second orientation 612, the air flow guiding element 61, in particular the outside surface 613 of the air flow guiding element 61, inclinedly protrudes from the outside surface 651 of the rotor blade wall 65. As such, the air flow guiding element 61 causes a strongest influence on a portion of an air flow 28 flowing along the suction side 25 from the leading edge section 23 to the trailing edge section 24 of the rotor blade 20 (see Fig. 2) when the air flow guiding element 61 is in its second orientation 612, and causes a weakest or substantially no influence on the portion of the air flow 28 when the air flow guiding element 61 is in its first orientation 611.

The linearly operating actuator 62 is configured to perform a linear expansion and retraction so as to adjust the orientation 611, 612 of the air flow guiding element 61, 61' between the first orientation 611 and the second orientation 612. The linearly operating actuator 62 has a first end section 63, which is fixedly arranged relative to the rotor blade wall 251, 65 in the mounting section 252 of the rotor blade 20, and a second end section 64, which is substantially linearly movable between a first stroke reversal point 641 and a second stroke reversal point 642. The first stroke reversal point 641 of the linearly operating actuator 62 corresponds to the first orientation 611 of the air flow guiding element 61, and the second stroke reversal point 642 of the actuator 62 corresponds to the second orientation 612 of the air flow guiding element 61'.

The linearly operating actuator 62 has a configuration, which may be one of the configurations 44 to 47 illustrated in Figs. 4 to 7 or one of the configurations 54 to 56 illustrated in Figs. 8 to 10. The linearly operating actuator 62 comprises at least one dielectric electroactive polymer, DEAP, film 43, 53 that is sandwiched between a first electrode layer 41, 51 and a second electrode layer 42, 52 associated with the film 43, 53 (see Figs. 3 and 4 to 10). The linearly operating actuator 62 is configured to be actuated by applying an electric voltage difference to the first electrode layer 41, 51 and the second electrode layer 42, 52 such that the air flow guiding element 61 assumes a position between the first and the second orientation 611 and 612.

In the embodiment of the aerodynamic device 29, 60 illustrated in Fig. 11, the linearly operating actuator 62 is directly coupled to the air flow guiding element 61. In particular, the second end section 64 of the linearly operating actuator 62 is two-dimensionally fixed to an inside surface 614 of the air flow guiding element 61. According to this type of coupling of the second end section 64 of the linearly operating actuator 62 to the air flow guiding element 61, the actuator 62 will, in addition to its linear expansion and retraction, also undergo a slight bending deformation when the second end section 64 performs its linear extension in a direction towards the second stroke reversal point 642.

The abutment structure 66 is fixedly arranged with respect to the rotor blade wall 251, 65 in the mounting section 252 of the rotor blade 20. In particular, the abutment structure 66 is arranged inside of the envelope formed by the rotor blade wall 251, 65 such that the first end section 63 of the actuator 62 can be arranged further inside of the rotor blade wall 251, 65 than an inside surface 652 of the rotor blade wall 251, 65.

The abutment structure 66 comprises a first connection element 661, a second connection element 662, and an abutment element 663 having an abutment surface 664, as illustrated in Fig. 11.

The first connection element 661 has a first end connected to the inside surface 652 of the rotor blade wall 65 and a second end connected to a first side of the abutment element 663 for holding the first side of the abutment element 663 in place relative to the inside surface 652 of the rotor blade wall 65. Similarly, the second connection element 662 has a first end connected to the inside surface 652 of the rotor blade wall 65 and a second end connected to a second side of the abutment element 663 for holding the second side of the abutment element 663 in place relative to the inside surface 652 of the rotor blade wall 65.

The abutment element 663 is held in place by the first connection element 661 and the second connection element 662, and provides an abutment surface 664 for the linearly operating actuator 62, in particular for the first end section 63 of the linearly operating actuator 62. The abutment surface 664 is arranged at an inside depth 655 with respect to the air flow guiding element 61, in particular with respect to the inside surface 614 of the air flow guiding element 61.

The first end section 63 of the linearly operating actuator 62 is fixedly arranged relative to the rotor blade wall 251, 65 via the abutment structure 66 in that the first end section 63 abuts against the abutment structure 66, and is fixedly connected to the abutment structure 66. In particular, the first end section 63 of the actuator 62 abuts against and is fixedly connected to the abutment surface 664 of the abutment element 663 of the abutment structure 66.

The abutment structure 66 enables that the first end section 63 of the linearly operating actuator 62 can be arranged at an inside depth 655 with respect to (the inside surface 614 of) the air flow guiding element 61. The inside depth 655 is great and/or deep enough so that the linearly operating actuator 62, which extends over a significant length between its first end section 63 and its second end section 64, can be arranged under the air flow guiding element 61, in particular with its length direction substantially perpendicular to the inside surface 614 of the air flow guiding element 61, and between the inside surface 614 of the air flow guiding element 61 and the abutment surface 664 of the abutment structure 66.

The linearly operating actuator 62 must have a particular minimum length such that its second end section 64 can achieve a minimum stroke, i.e. a distance between the first stroke reversal point 641 and the second stroke reversal points 642. The stroke should be great enough such that the air flow guiding element 61 can be pivoted far enough to bridge a great enough difference in its orientation between the first orientation 611 and the second orientation 612, such that a great enough or desired difference of a controllable influence of the air flow guiding element 61 on the portion of the air flow 28 flowing over the suction side 25 from the leading edge section 23 to the trailing edge section 24 of the rotor blade 20 can be achieved.

When designing the aerodynamic device 29, 60, in particular the linearly operating actuator 62, such that the stroke is be great enough, an inherent limitation for the percentaged stroke of the configuration of the DEAP film of the actuator 62 must be taken into account.

The stroke of, in particular the second end section 64 of, the linearly operating actuator 62 is namely proportional to a percentaged stroke of the linearly operating actuator 62 and the length of the linearly operating actuator 62 between its first end section 63 and its second end section 64. The percentaged stroke of the linearly operating actuator 62 is limited to a value that depends on the DEAP material, in particular the DE material, and the configuration of the linearly operating actuator 62, for example one of the configurations 44 to 47 illustrated in Figs. 4 to 7 or one of the configurations 54 to 56 illustrated in Figs. 8 to 10. It is recalled that the percentaged stroke of the configurations is down to -10% for the multi-stack configuration 44, down to - 5% for the folded configuration 45, down to -15% for the helical configuration 46, down to -5,2% for the twisted configuration 47, up to 14% for the tubular configuration 55, and a up to 35,8% for the rolled configuration 56.

The linearly operating actuator 62 may be configured such that its second end section 64 is extended most far, i.e. reaches its second stroke reversal point 642, when an actuation is most strongly pronounced, i.e. when the electrical voltage difference applied between the first and the second electrode layers 51 and 52 is greatest. As is understood from the discussions of the different mechanical and/or geometrical configurations of an actuator above with respect to Figs. 4 to 10, such a configuration of the linearly operating actuator 62 can be achieved when its DEAP film 53, 33 is actuatable expandingly in an in-plane direction 332 of the film 33, as is the case for the configurations 54 to 56 illustrated in Figs. 8 to 10. In such a configuration, when a minimum electrical voltage difference or no electrical voltage difference is applied to the pair of electrode layers 51 and 52, the second end section 64 of the actuator 62 is at its first stroke reversal point 641, which corresponds to a minimum length of the actuator 62. This in turn corresponds to the first orientation 611 of the air flow guiding element 61 and to the weakest or substantially no influence on the portion of the air flow 28 flowing over the suction side 25 from the leading edge section 23 to the trailing edge section 24 of the rotor blade 20. Such a configuration may advantageous in that it is considered to be fail-safe-configuration.

Alternatively, the linearly operating actuator 62 may be configured such that its second end section 64 is extended the least far, i.e. reaches its first stroke reversal point 641, when an actuation is most strongly pronounced, i.e. when the electrical voltage difference applied between the first and the second electrode layers 51 and 52 is greatest. As is understood from the discussions of the different mechanical and/or geometrical configurations of an actuator above with respect to Figs. 4 to 10, such a configuration of the linearly operating actuator 62 can be achieved when its DEAP film 43, 33 is actuatable compressively in a thickness direction 331 of the film 33, as is the case for the configurations 44 to 47 illustrated in Figs. 4 to 7. In such a configuration, when a minimum electrical voltage difference or no electrical voltage difference is applied to the pair of electrode layers 41 and 42, the second end section 64 of the actuator 62 is at its second stroke reversal point 642, which corresponds to a maximum length of the actuator 62. This in turn corresponds to the second orientation 612 of the air flow guiding element 61 and to the strongest influence on the portion of the air flow 28 flowing over the suction side 25 from the leading edge section 23 to the trailing edge section 24 of the rotor blade 20.

**Fig. 12** shows a schematic cross-sectional view of an aerodynamic device 29, 60 according to a second embodiment of the present disclosure. The aerodynamic device 29, 60 of Fig. 12 similar to the aerodynamic device 29, 60 of Fig. 11 in most respects, and it differs substantially in the geometric design of the air flow guiding element 61.

Also in the embodiment of the aerodynamic device 29, 60 illustrated in Fig. 12, the air flow guiding element 61, 61' is arranged in an opening 654 of the rotor blade wall 65, at least when it assumes its first orientation 611. Though, the air flow guiding element 61 has a thickness that is smaller than a thickness of the rotor blade wall 65. For example, the air flow guiding element 61 may have a thickness that less than 50%, preferably less than 25%, and more preferably less than 10% of the thickness of the rotor blade wall 65.

Also in the embodiment of the aerodynamic device 29, 60 illustrated in Fig. 12, the linearly operating actuator 62 is directly coupled to the air flow guiding element 61. In particular, the second end section 64 of the linearly operating actuator 62 is two-dimensionally fixed to the inside surface 614 of the air flow guiding element 61. As in Fig. 11, according to this type of coupling of the second end section 64 of the linearly operating actuator 62 to the air flow guiding element 61, the actuator 62 will, in addition to its linear expansion and retraction, also undergo a slight bending deformation when the second end section 64 performs its linear extension in a direction towards the second stroke reversal point 642.

**Fig. 13** shows a schematic cross-sectional view of an aerodynamic device 29, 60 according to a third embodiment of the present disclosure. The aerodynamic device 29, 60 of Fig. 13 is similar to the aerodynamic device of Fig. 11 in many respects, and differs substantially in the coupling of the linearly operating actuator to the air flow guiding element.

Also in the embodiment of the aerodynamic device 29, 60 illustrated in Fig. 13, the air flow guiding element 61, 61' is arranged in an opening 654 of the rotor blade wall 65, at least when it assumes its first orientation 611. And, the air flow guiding element 61 has a thickness that is smaller than a thickness of the rotor blade wall 65.

However, in deviation from the embodiments illustrated in Figs. 11 and 12, in the embodiment of the aerodynamic device 29, 60 illustrated in Fig. 13, the second end section 64 of the actuator 62 has a convex surface 645. The convex surface 645 has an abutment area 646, which abuts against the inside surface 614 of the air flow guiding element 61. The abutment area 646 on the convex surface 645 moves over the convex surface 645 when the second end section 64 of the actuator 62 performs its linear extension in a direction towards the second stroke reversal point 642.

The abutment of the convex surface 645 against the inside surface 614 of the air flow guiding element 61 may simply be supported by a pushing force, which the second end section 64 of the actuator 62 exerts on the inside surface 614 of the air flow guiding element 61, and eventually also against the gravitational force of the air flow guiding element 61. The abutment of the convex surface 645 against the inside surface 614 of the air flow guiding element 61 may further be supported and secured by a pair of magnetic elements that mutually exert an attracting force on the respective other one, wherein a first magnetic element is arranged within the rotor blade wall 65 at the inside surface 652 thereof and a second magnetic element is arranged within the convex surface 645.

According to this type of coupling of the second end section 64 of the linearly operating actuator 62 to the air flow guiding element 61, the actuator 62 can perform its linear expansion and retraction while remaining in a straight linear shape, in particular without having to undergo the slight bending deformation illustrated in Figs. 11 and 12, when the second end section 64 performs its linear extension in a direction towards the second stroke reversal point 642.

Since the actuator 62 in Fig. 13 can perform its linear expansion and retraction while remaining in a straight linear shape, the deformation of the actuator 62 may be guided by an actuator guiding structure 69. The actuator guiding structure 69 is arranged inside the opening 654 in the rotor blade wall 65 and has itself an opening 691, through which the linearly operating actuator 62 extends, and which guides the linear movement of the linearly operating actuator 62 when it performs its linear expansion and retraction.

**Fig. 14** shows a schematic cross-sectional view of an aerodynamic device 29, 60 according to a fourth embodiment of the present disclosure. The aerodynamic device 29, 60 of Fig. 14 is similar to the aerodynamic devices of Figs. 11 and 13 in many respects, and differing substantially in the coupling of the linearly operating actuator 62 to the air flow guiding element 61.

Also in the embodiment of the aerodynamic device 29, 60 illustrated in Fig. 13, the air flow guiding element 61, 61' is arranged in an opening 654 of the rotor blade wall 65, at least when it assumes its first orientation 611. And, the air flow guiding element 61 has a thickness that is smaller than a thickness of the rotor blade wall 65.

However, in deviation from the embodiments illustrated in Figs. 11, 12, and 13, in the embodiment of the aerodynamic device 29, 60 illustrated in Fig. 14, the second end section 64 of the actuator 62 has a first bearing 67 configured to connect the second end section 64 to the airflow guiding element 61. The first bearing 67 allows that a first angle 672 between a longitudinal direction 621 of the actuator 62 and an inside surface 614 of the air flow guiding element 61 changes, when the second end section 64 of the actuator 62 performs its linear extension in a direction towards the second stroke reversal point 642.

Furthermore, at the side of the abutment structure 66, the first end section 63 of the actuator 62 has a second bearing 68 configured to connect the first end section 63 to the abutment structure 66, in particular to the abutment element 663 of the abutment structure 66. The second bearing 68 allows that a second angle 682 between a longitudinal direction 621 of the actuator 62 and the abutment surface 664 of the abutment structure 66 changes, when the second end section 64 of the actuator 62 performs its linear extension in a direction towards the second stroke reversal point 642.

The embodiment of the aerodynamic device 29, 65 of Fig. 14 has the advantage that the linearly operating actuator 62 can remain in its straight linear shape when performing its linear expansion and retraction, while it is thereby allowed to change its linear direction.

**Fig. 15** shows a schematic cross-sectional view of an aerodynamic device 29, 70 according to a fifth embodiment of the present disclosure. The aerodynamic device 29, 70 of Fig. 15 is similar to the aerodynamic device of Fig. 11 in many respects, and differs substantially in the arrangement of the air flow guiding element 61, 73 with respect to the rotor blade wall 65.

In the embodiment of the aerodynamic device 29, 70 illustrated in Fig. 15, when the air flow guiding element 61, 73 is in its first orientation 611, the air flow guiding element 661 is arranged outside of the rotor blade wall 251, 65 in the mounting section 252, even when the air flow guiding element 61 is in its first orientation 611. The air flow guiding element 61, 73 in Fig. 15 is not arranged inside the opening 654 of the rotor blade wall 65.

In order to provide an aerodynamic shape to the aerodynamic device 70, it has a first transition element 71, which is arranged upstream of the air flow guiding element 73 with respect to the air flow direction 281, and a second transition element 72, which is arranged downstream of the air flow guiding element 73 with respect to the air flow direction 281.

The first transition element 71 is arranged at a side of the aerodynamic device 70 that faces in a direction 712 towards the leading edge section 23 of the rotor blade 20, and extends along a length of the aerodynamic device 70 in the extension direction of the aerodynamic device 70. The first transition element 71 tapers from a thickness 711 corresponding to the height, by which the air flow guiding element 73 protrudes from the outside surface 651 of the rotor blade wall 65, in the direction 712 towards the leading edge section 23 of the rotor blade 20 and/or perpendicular to the extension direction 291 of the rotor blade 20 and away from the air flow guiding element 73.

The second transition element 72 is arranged at a side of the aerodynamic device 70 that faces in a direction 722 towards the trailing edge section 23 of the rotor blade 20, and extends along a length of the aerodynamic device 70 in the extension direction 291 of the aerodynamic device 70. The second transition element 72 tapers from a thickness 721 corresponding to the height, by which the air flow guiding element 73 protrudes from the outside surface 651 of the rotor blade wall 65, in the direction 722 towards the trailing edge section 23 of the rotor blade 20 and/or perpendicular to the extension direction 291 away from the air flow guiding element 73.

Also in the embodiment of the aerodynamic device 29, 70 illustrated in Fig. 15, the linearly operating actuator 62 is directly coupled to the air flow guiding element 61, 73. In particular, the second end section 64 of the linearly operating actuator 62 is two-dimensionally fixed to the inside surface 614 of the air flow guiding element 61, 73. According to this type of coupling of the second end section 64 of the linearly operating actuator 62 to the air flow guiding element 61, the actuator 62 will, in addition to its linear expansion and retraction, undergo a slight bending deformation when the second end section 64 performs its linear extension in the direction towards the second stroke reversal point 642. The linearly operating actuator 62 extends through the opening 654 of the rotor blade wall 65 throughout its full extension and retraction, i.e. throughout the stroke performed by the second end section 64 of the actuator.

As in the embodiments of the aerodynamic devices 29, 60 illustrated in Figs. 11 to 14, also in the embodiment illustrated in Fig. 15, the first end section 63 of the linearly operating actuator 62 is fixedly arranged relative to the rotor blade wall 251, 65 via the abutment structure 66, wherein the first end section 63 abuts against the abutment element 663 of the abutment structure 66, and is fixedly connected to the abutment element 663 of the abutment structure 66.

**Fig. 16** shows a schematic cross-sectional view of an aerodynamic device 29, 70 according to a sixth embodiment of the present disclosure. The aerodynamic device 29, 70 of Fig. 16 is similar to the aerodynamic device of Fig. 13 in many respects, and differs substantially in the arrangement of the air flow guiding element 61, 73 with respect to the rotor blade wall 65. Also, the aerodynamic device 29, 70 of Fig. 16 is similar to the aerodynamic device of Fig. 15 in many respects, and differs substantially in the coupling of the linearly operating actuator 62 to the air flow guiding element 61, 73 and the guiding of the linearly operating actuator 62.

As in the embodiment of the aerodynamic device 29, 70 illustrated in Fig. 15, also in the embodiment illustrated in Fig. 16, when the air flow guiding element 61, 73 is in its first orientation 611, the air flow guiding element 661 is arranged outside of the rotor blade wall 251, 65 in the mounting section 252, even when the air flow guiding element 61 is in its first orientation 611. Again, the air flow guiding element 61, 73 in Fig. 15 is not arranged inside the opening 654 of the rotor blade wall 65.

In order to provide an aerodynamic shape to the aerodynamic device 70, it has a first transition element 71, which is arranged upstream of the air flow guiding element 73 with respect to the air flow direction 281, and a second transition element 72, which is arranged downstream of the air flow guiding element 73 with respect to the air flow direction 281. The arrangement of the first transition element 71 and the second transition element 72 in the embodiment of Fig. 16 is similar to their arrangements in the embodiment of Fig. 15.

**Fig. 17** shows a schematic perspective view of an aerodynamic device 60, 80 according to a seventh embodiment of the present disclosure. The aerodynamic device 60, 80 differs from the aerodynamic devices of Figs. 11 to 16 in that it is sub-divided in its extension direction in a plurality of sectional aerodynamic devices 80-1 through 80-6.

As shown in Fig. 2 and as in the embodiment of the aerodynamic devices 29, 60 and 70 illustrated in Figs. 11 to 16, also in the embodiment illustrated in Fig. 17, the rotor blade 20 extends longitudinally along a rotor blade length axis 212 from the root 211 of the rotor blade 20 to the tip 221 of the rotor blade 20. Furthermore, the aerodynamic devices 29, 60, 70 and 80 extend longitudinally in an extension direction 291, which is substantially parallel to, or at an acute angle with, the rotor blade length axis 212.

In the embodiment of the aerodynamic devices 80 illustrated in Fig. 17, the aerodynamic device 80) is subdivided in its extension direction 291 in a plurality of sectional aerodynamic devices 80-1 through 80-6, which are mutually neighbouring each other. While six sectional aerodynamic devices 80-1 through 80-6 are shown in Fig. 17, different numbers of sectional aerodynamic devices are possible, but at least two.

Each one of the sectional aerodynamic devices 80-1 through 80-6 has a section-associated air flow guiding element 81-1 through 81-6, and a section-associated linearly operating actuator 82-1 through 82-6. Accordingly, the sectional aerodynamic devices 80-1 through 80-6 may be operated independently from one another, in particular may be independently supplied with an electrical voltage difference to be applied to the DEAP film of the section-associated linearly operating actuator 82-1 through 82-6.

Each one of the sectional aerodynamic devices 80-1 through 80-6 may have the features of any one of the embodiments of the aerodynamic devices 60 and 70 shown in Figs. 11 to 16.

**Fig. 18** shows a schematic perspective view of an aerodynamic device 60, 90 according to an eighth embodiment of the present disclosure. The aerodynamic device 60, 90 of Fig. 18 is characteristic in that it extends in its extension direction 291 while comprising one single linearly operating actuator 62, 93 arranged at a centre 92 of the longitudinal extension 291.

Again, as in the aerodynamic device 29 shown in Fig. 17, the rotor blade 20 extends longitudinally along the rotor blade direction 212 from the root 211 of the rotor blade 20 to the tip 221 of the rotor blade 20. Furthermore, the aerodynamic device 60, 90 extends longitudinally in its extension direction 291, which is substantially parallel to, or at an acute angle with, the rotor blade length axis 212.

In the embodiment of the aerodynamic devices 80 illustrated in Fig. 18, the aerodynamic device 60, 90 has a continuous air flow guiding element 91, which extends continuously in the extension direction 291. Furthermore, the aerodynamic device 60, 90 has one single linearly operating actuator 93, which is arranged longitudinally at or near a centre 92 of the continuous air flow guiding element 91 in the extension direction 291.

The one single linearly operating actuator 93 is configured to operate the continuous air flow guiding element 91 so as to be pivotally movable between a first orientation (illustrated in Fig. 18) and a second orientation (not shown), wherein the first orientation causes a weakest or substantially no influence on the portion of the air flow 28 flowing along the suction side 25 from the leading edge section 23 to the trailing edge section 24, and the second orientation causes a strongest influence on the portion of the air flow.

**Fig. 19** shows a schematic perspective view of an aerodynamic device 60, 90 according to a ninth embodiment of the present disclosure. The aerodynamic device 60, 90 differs from the aerodynamic device of Fig. 18 in that it extends in its extension direction 291 while comprising two linearly operating actuators 94-1, 94-2 arranged at opposite sides with respect to a centre 92 of the longitudinal extension 291.

As in the embodiment of the aerodynamic devices 80 illustrated in Fig. 18, also in the embodiment of the aerodynamic devices 90 illustrated in Fig. 19, the aerodynamic device 60, 90 has a continuous air flow guiding element 91, which extends continuously in the extension direction 291.

In deviation to the embodiment illustrated in Fig. 18, in the embodiment illustrated in Fig. 19, the aerodynamic device 60, 90 has two linearly operating actuators 94-1 and 94-2. A first linearly operating actuator 94-1 is arranged longitudinally with respect to a centre 92 of the continuous air flow guiding element 91 in the extension direction 291 closer to the root 211 of the rotor blade 20 (see Fig. 2). A second linearly operating actuator 94-2 is arranged longitudinally with respect to a centre 92 of the continuous air flow guiding element 91 in the extension direction 291 closer to the tip 221 of the rotor blade 20.

The first linearly operating actuator 94-1 and the second linearly operating actuator 94-2 are configured to operate synchronously the continuous air flow guiding element 91 so as to be pivotally movable between the first orientation (illustrated in Fig. 19) and a second orientation (not shown).

**Fig. 20** shows a schematic perspective view of an aerodynamic device 60, 90 according to a tenth embodiment of the present disclosure. The aerodynamic device 60, 90 of Fig. 20 differs from the aerodynamic devices of Figs. 18 and 19 in that it extends in its extension direction 291 while comprising more than two linearly operating actuators 95-1 through 95-6 arranged along the longitudinal extension 291.

As in the embodiments of the aerodynamic devices 80 illustrated in Figs. 18 and 19, also in the embodiment of the aerodynamic devices 90 illustrated in Fig. 20, the aerodynamic device 60, 90 has a continuous air flow guiding element 91, which extends continuously in the extension direction 291.

In deviation to the embodiments illustrated in Figs. 18 and 19, in the embodiment illustrated in Fig. 20, the aerodynamic device 60, 90 has more than two linearly operating actuators 95-1 through 95-6, which are distributed along the extension direction 291 and are mutually spaced at a distance 96 from each other in the extension direction 291. It may be preferred that the more than two linearly operating actuators 95-1 through 95-6 are arranged substantially equidistantly to one another. While six linearly operating actuators 95-1 through 95-6 are shown in Fig. 20, different numbers of linearly operating actuators 95-1 through 95-6 are possible, but more than two.

The more than two linearly operating actuators 95-1 through 95-6 are configured to operate synchronously the continuous air flow guiding element 91 so as to be pivotally movable between the first orientation (illustrated in Fig. 20) and a second orientation (not shown).

In this specification, example embodiments have been presented in terms of a selected set of details. However, a person of ordinary skill in the art would understand that many other example embodiments may be practiced which include a different selected set of these details. It is intended that the following claims cover all possible example embodiments.

Supplementary, it is to be noted that "having" or "comprising" does not exclude other elements or steps, and that "a" or "an" does not exclude a plurality. In addition, it is to be noted that features or steps, which have been described above with reference to one of the above embodiment examples, may also be used in combination with other features or steps of other embodiment examples that have been described above. Reference numerals in the claims are not to be construed as limitations.

## Claims

1. A rotor blade (20) for a wind turbine (10), wherein the rotor blade (20) has:
a rotor blade wall (251, 65), which forms an outer envelope of the rotor blade (20) and extends between a leading edge section (23) of the rotor blade and a trailing edge section (24) of the rotor blade, and which provides a mounting section (252) arranged on a suction side (25) of the rotor blade and for accommodating an aerodynamic device (29, 60);
wherein the aerodynamic device (29, 60) has:
an air flow guiding element (61), which is pivotally connected to the rotor blade wall (251, 65) in the mounting section (252), and
a linearly operating actuator (62), which is operatively, in particular directly, coupled to the air flow guiding element (61), and which is arranged and configured to adjust an orientation of the air flow guiding element (61) between a first orientation (611) and a second orientation (612),
wherein the air flow guiding element (61) causes a strongest influence on the portion of an air flow (28) flowing along the suction side (25) from the leading edge section (23) to the trailing edge section (24) of the rotor blade (20) when the air flow guiding element (61) is in its second orientation (612), and causes a weakest or substantially no influence on the portion of the air flow when the air flow guiding element (61) is in its first orientation (611), and
wherein the actuator (62) has a configuration (44-47; 54-56), which comprises at least one dielectric electroactive polymer, DEAP, film (43; 53) that is sandwiched between a first electrode layer (41; 51) and a second electrode layer (42; 52) associated with the film (43; 53), and which is configured to be actuated by applying an electric voltage difference to the first and the second electrode layer (41, 42; 51, 52) such that the air flow guiding element (61) assumes a position between the first and the second orientation (611, 612) .

2. The rotor blade (20) according to claim 1, having at least one of the following features:
i) the linearly operating actuator (62) has a first end section (63), which is fixedly arranged relative to the rotor blade wall (251, 65) in the mounting section (252), and a second end section (64), which is substantially linearly movable between a first stroke reversal point (641) and a second stroke reversal point (642), wherein the first stroke reversal point (641) of the actuator (62) corresponds to the first orientation (611) of the air flow guiding element (61), and the second stroke reversal point (642) of the actuator (62) corresponds to the second orientation (612) of the air flow guiding element (61);
ii) the aerodynamic device (29, 60) is configured for controlling a lift of the rotor blade (20) by influencing a portion of an air flow (28) across the suction side (25) between the leading edge section (23) and the trailing edge section (24) of the rotor blade (20);
iii) the DEAP film (43; 53) is a dielectric elastomer film;
iv) the aerodynamic device (29,60) comprises an electrical voltage supply device (100) configured to provide an electrical voltage that is used to provide the electrical voltage difference (39) applied to the first and the second electrode layers (31, 41, 51; 32, 42, 52), wherein the electrical voltage supply device (100) further comprises one of the following features:
iv.1) the electrical voltage supply device (100) is arranged within the rotor blade (20), in particular in a root section (21) of the rotor blade (20);
iv.2) the electrical voltage supply device (100) is arranged outside of the rotor blade (20) and elsewhere within the wind turbine (10), for example in a rotor hub (13) of the wind turbine (10) or in a nacelle (12) of the wind turbine (10).

3. The rotor blade (20) according to claim 1 or 2, wherein the DEAP film (43; 33) is actuatable compressively in a thickness direction (331) of the film (43; 33), and wherein when applying a maximum voltage difference to the first and the second electrode layer (41, 42), the second end section (64) of the actuator is at the first stroke reversal point (641), which corresponds to a minimum length of the actuator (62) ;
in particular wherein a configuration of the actuator is selected from a group of configurations that includes a multi-stack configuration (44), a folded configuration (45), a helical configuration (46), and a twisted configuration (47);
further in particular wherein a percentaged stroke of the configuration is down to -10% for a multi-stack configuration (44), down to -5% for a folded configuration (45), down to -15% for a helical configuration (46), and down to - 5,2% for a twisted configuration (47).

4. The rotor blade (20) according to claim 1 or 2, wherein the DEAP film (53; 33) is actuatable expandingly in an in-plane direction (332) of the film (53; 33), and wherein when applying a maximum voltage difference to the first and the second electrode layer (51, 52), the second end section (64) of the actuator (62) is at the second stroke reversal point (642), which corresponds to a maximum length of the actuator (62) ;
in particular wherein a configuration of the actuator (62) is selected from a group of configurations that includes a tubular configuration (54), a rolled configuration (55), and a cone configuration (56);
further in particular wherein a percentaged stroke of the configuration is up to 14% for a tubular configuration (55), and a up to 35,8% for a rolled configuration (56).

5. The rotor blade (20) according to any one of the claims 1 to 4, wherein the aerodynamic device (29; 60) further has an abutment structure (66), which is fixedly arranged with respect to the rotor blade wall (251; 65) in the mounting section (252), and to which the first end section (63) of the actuator (62) is fixedly connected;
wherein the abutment structure (66) is arranged inside of the envelope formed by the rotor blade wall (251; 65) such that the first end section (63) of the actuator (62) can be arranged further inside of the rotor blade wall (251, 65) than an inside surface (652) of the rotor blade wall (251; 65) .

6. The rotor blade (20) according to claim 5, wherein the abutment structure (66) provides an abutment surface (664) to the first end section (63) of the actuator (62), and wherein an inside depth (665) of the abutment surface (664), in particular an inside depth (665) with respect to an underside (614) of the air flow guiding element (61), provided for the first end section (63) of the actuator (62) is great enough such that a stroke, in particular a distance (643) between the first and the second stroke reversal points (641, 642), of the second end section (64) of the actuator (62) can be great enough such that the air flow guiding element (61) can be pivoted far enough to bridge a great enough difference in its orientation between the first orientation (611) and the second orientation (612), in particular when taking into account an inherent limitation for the percentaged stroke of the configuration (44-47; 54-56) of the DEAP film (43; 53).

7. The rotor blade (20) according to any one of the claims 1 to 6, having one of the following features:
i) the second end section (64) of the actuator (62) is two-dimensionally fixed to an inside surface (614) of the air flow guiding element (61),
in particular wherein the actuator (62) also undergoes a bending deformation when the second end section (64) performs its linear extension in a direction towards the second stroke reversal point (642);
ii) the second end section (64) of the actuator (62) has a convex surface (645), an abutment area (646) of which abuts against an inside surface (614) of the air flow guiding element (61),
in particular wherein the abutment area (646) on the convex surface (645) of the second end section (64) moves over the convex surface (645) when the second end section (64) of the actuator (62) performs its linear extension in a direction towards the second stroke reversal point (642);
iii) the second end section (64) of the actuator (62) has a first bearing (67) configured to connect the second end section (64) to the airflow guiding element (61), which first bearing (67) allows that a first angle (672) between a longitudinal direction (621) of the actuator (62) and an inside surface (614) of the air flow guiding element (61) changes, when the second end section (64) of the actuator (62) performs its linear extension in a direction towards the second stroke reversal point (642),
in particular wherein, in the rotor blade according to claim 5 or 6, which has an abutment structure (66), the first end section (63) of the actuator (62) has a second bearing (68) configured to connect the first end section (63) to the abutment structure (66), which second bearing (68) allows that a second angle (682) between a longitudinal direction (621) of the actuator (62) and an abutment surface (664) of the abutment structure (66) changes, when the second end section (64) of the actuator (62) performs its linear extension in a direction towards the second stroke reversal point (642) .

8. The rotor blade (20) according to any one of the claims 1 to 7, wherein, when the air flow guiding element (61) is in its first orientation (611), the air flow guiding element (61) is arranged within an opening (654) of the rotor blade wall (251; 65) in the mounting section (252), and an outside surface (613) of the air flow guiding element (61) is substantially flush with the outside surface (651) of the rotor blade wall (251; 65) in the mounting section (252).

9. The rotor blade (20) according to any one of the claims 1 to 7, wherein, when the air flow guiding element (61) is in its first orientation (611), the air flow guiding element (661) is arranged outside of the rotor blade wall (251; 65) in the mounting section (252),
in particular wherein the aerodynamic device (29; 70) has a first transition element (71), which is arranged upstream of the air flow guiding element (73) with respect to the air flow direction (281), and a second transition element (72), which is arranged downstream of the air flow guiding element (73) with respect to the air flow direction (281),
wherein the first transition element (71) is
- in particular arranged at a side of the aerodynamic device (29, 70) that faces in a direction (712) towards the leading edge section (23) of the rotor blade (20),
- extends along a length of the aerodynamic device (29, 70) in the extension direction (291) of the aerodynamic device (29, 70), and
- tapers from a thickness (711) corresponding to the height, by which the air flow guiding element (73) protrudes from the outside surface (651) of the rotor blade wall (251; 65), in the direction (712) towards the leading edge section (23) of the rotor blade (20) and/or perpendicular to the extension direction (291) away from the air flow guiding element (73);
wherein the second transition element (72) is
- in particular arranged at a side of the aerodynamic device (29, 70) that faces in a direction (722) towards the trailing edge section (23) of the rotor blade (20),
- extends along a length of the aerodynamic device (29, 70) in the extension direction (291) of the aerodynamic device (29, 70), and
- tapers from a thickness (721) corresponding to the height, by which the air flow guiding element (73) protrudes from the outside surface (651) of the rotor blade wall (251; 65), in the direction (722) towards the trailing edge section (23) of the rotor blade (20) and/or perpendicular to the extension direction (291) away from the air flow guiding element (73).

10. The rotor blade (20) according to any one of the claims 1 to 9, wherein the rotor blade (20) extends longitudinally along a rotor blade length axis (212) from a root (211) of the rotor blade (20) to a tip (221) of the rotor blade (20), wherein the aerodynamic device (251; 80) extends longitudinally in an extension direction (291), which is substantially parallel to, or at an acute angle with, the rotor blade length axis (212),
wherein the aerodynamic device (29; 80) is subdivided in its extension direction (291) in a plurality of sectional aerodynamic devices (80-1, ..., 80-6), which are mutually neighbouring each other,
wherein each sectional aerodynamic device (80-1, ..., 80-6) has a section-associated air flow guiding element (81-1, ..., 81-6) and a section-associated linearly operating actuator (82-1, ..., 82-6) .

11. The rotor blade (20) according to any one of the claims 1 to 9, wherein the rotor blade (20) extends longitudinally along a rotor blade length axis (212) from a root (211) of the rotor blade (20) to a tip (221) of the rotor blade (20), wherein the aerodynamic device (29; 90) extends longitudinally in an extension direction (291), which is substantially parallel to, or at an acute angle with, the rotor blade length axis (212),
wherein the aerodynamic device (29; 90) has a continuous air flow guiding element (91), which extends continuously in the extension direction (291), and further has at least one of the following:
i) one single linearly operating actuator (93), which is arranged longitudinally at or near a centre (92) of the continuous air flow guiding element (91) in the extension direction (291),
ii) two linearly operating actuators (94-1, 94-2), wherein a first linearly operating actuator (94-1) is arranged longitudinally with respect to a centre (92) of the continuous air flow guiding element (91) in the extension direction (291) closer to the root (211) of the rotor blade (20), and a second linearly operating actuator (94-2) is arranged longitudinally with respect to a centre (92) of the continuous air flow guiding element (91) in the extension direction (291) closer to the tip (221) of the rotor blade (20),
iii) more than two linearly operating actuators (95-1, ..., 95-6), which are distributed along the extension direction (291) and are mutually spaced at a distance (96) from each other in the extension direction (291).

12. A method of operating a wind turbine (10), wherein the wind turbine (10) comprises:
a rotor blade (20), which has a rotor blade wall (251; 65), which forms an outer envelope of the rotor blade (20) and extends between a leading edge section (23) of the rotor blade (20) and a trailing edge section (24) of the rotor blade (20), and which provides a mounting section (252) arranged on a suction side (25) of the rotor blade (20) and for accommodating an aerodynamic device (29; 60),
wherein the aerodynamic device (29; 60) has an air flow guiding element (61), which is pivotally connected to the rotor blade wall (251; 65) in the mounting section (252), and a linearly operating actuator (62), which is arranged and configured to adjust an orientation of the air flow guiding element (61) between a first orientation (611) and a second orientation (612), wherein the actuator (62) has a configuration (44-47; 54-56), which comprises at least one dielectric electroactive polymer, DEAP, film (43; 53) that is sandwiched between a first electrode layer (41; 51) and a second electrode layer (42; 52) associated with the film (43; 53),
wherein the method has:
applying an electrical voltage difference to the first and the second electrode layers (41, 42; 51, 52) so that the configuration (44-47; 54-56) of the DEAP film (43; 53) is actuated such that the air flow guiding element (61) assumes a first adjusted orientation between the first orientation (611) of the air flow guiding element (61) and the second orientation (612) of the air flow guiding element (61);
wherein the air flow guiding element (61) causes a strongest influence on the portion of an air flow (28) flowing along the suction side (25) from the leading edge section (23) to the trailing edge section (24) of the rotor blade (20) when the air flow guiding element (61) is in its second orientation (612), and causes a weakest or substantially no influence on the portion of the air flow when the air flow guiding element (61) is in its first orientation (611).

13. The method according to claim 12, wherein the method has at least one of the following features:
i) the method further has varying the electrical voltage difference applied to the first and the second electrode layers (41, 42; 51, 52), so that the air flow guiding element (61) changes its orientation, in particular continuously, from the first adjusted orientation so as to assume a second adjusted orientation between the first orientation (611) and the second orientation (612);
ii) the method further has controlling, by the aerodynamic device (29, 60), a lift of the rotor blade (20) by influencing a portion of an air flow (28) across the suction side (25) between the leading edge section (23) and the trailing edge section (24) of the rotor blade (20);
iii) the DEAP film (43; 53) is a dielectric elastomer film.

14. The method according to claim 12 or 13, wherein the method has one of the following features:
i) the DEAP film (43; 33) is actuatable compressively in a thickness direction (331) of the film (43; 33), and the method further has applying a maximum voltage difference to the first and the second electrode layer (41, 42) such that the second end section (64) of the actuator is at the first stroke reversal point (641), which corresponds to a minimum length of the actuator (62);
ii) the DEAP film (53; 33) is actuatable expandingly in an in-plane direction (332) of the film (53; 33), and the method further has applying a maximum voltage difference to the first and the second electrode layer (51, 52) such that the second end section (64) of the actuator (62) is at the second stroke reversal point (642), which corresponds to a maximum length of the actuator (62).

15. A wind turbine (10), which has a rotor blade (20) according to any one of the claims 1 to 11, or which is operated according to the method according to claim 12.
